# EUROPEAN PATENT SPECIFICATION

(11) **EP 2 302 274 B1**
(45) Date of publication and mention of the grant of the patent: **04.06.2014**
(21) Application number: 09800399.9
(22) Date of filing: 22.07.2009
(51) Int. Cl.: F16L 19/10, F16L 19/14, F16L 55/11

(54) **Flareless pipe coupling structure**
Bördellose Rohrverbindungsstruktur
Structure de raccordement de tuyau de type non évasé

(30) Priority: 23.07.2008 JP 2008190265
(43) Date of publication of application: 30.03.2011
(73) Proprietor: Daikin Industries, Ltd., Osaka 530-8323 (JP)
(72) Inventor: NAKATA, Haruo, Sakai-shi Osaka 591-8511 (JP); SHIMAMURA, Takashi, Sakai-shi Osaka 591-8511 (JP); SHIMOMACHI, Takanori, Settsu-shi Osaka 566-8585 (JP); HIRATA, Hiroyuki, Settsu-shi Osaka 566-8585 (JP)
(74) Representative: HOFFMANN EITLE
(86) International application number: PCT/JP2009/063084
(87) International publication number: WO 2010/010885

(56) References cited:
- WO-A1-2007/058290
- WO-A1-2008/032564
- JP-A- 2005 337 326
- JP-A- 2007 162 928
- JP-A- 2008 069 811
- US-A- 3 618 990

## Description

The present invention relates to a flareless pipe coupling structure, with a flareless pipe coupling structure having a ferrule tightly held between a fitting main body and coupling member.

Flareless pipe fittings have been used in piping systems such as refrigerant piping for refrigerating devices, hot-water supply piping for water heating devices, and water supply piping. A flareless pipe fitting includes a fitting main body that Is attached to an apparatus to which piping will be connected (apparatus-to-be-connected), and a coupling member. The coupling member is threaded to the fitting main body so as to be installed, while attached to the outer surface of the piping to be connected. For example, Patent Document 1 discloses one such flareless pipe fitting that includes an Independently formed ferrule formed separately from a coupling member and a fitting main body. Such ferrules are commonly used. However, when ferrules of such pipe fittings are handled as separate components, the ferrules are difficult to handle because of their small sizes. Specifically, ferrules cannot be installed efficiently and are likely to be lost. Also, ferrules are likely to be damaged during transportation, storage, and installation.

In this respect, a ferrule that Is formed integrally with a coupling member has been developed. In this case, the ferrule is separated from the coupling member in a pipe connecting process, in which the coupling member is fastened to a fitting main body. Thereafter, the ferrule functions in the same manner as a conventional independent ferrule. Accordingly, pipe connection is executed in the same manner as the case where an independent ferrule Is used. For example, Patent Document 2 and Patent Document 3 disclose such pipe fittings in which a ferrule Is located inside a coupling member formed as a cylindrical nut. Further, Patent Document 4 discloses a ferrule that is Integrally formed with a shaft-like coupling member so as to protrude from the distal end of the coupling member. An external thread is formed on the outer circumferential surface of the coupling member. An Internal thread Is formed on the Inner circumferential surface of a fitting main body, which is formed as a cylindrical member. The internal thread and the external thread of the coupling member are threaded to each other.

### Prior Art Documents

Patent Document 1: Japanese Laid-Open Patent Publication No. 2003-74768
Patent Document 2: Japanese National Phase Laid-Open Patent Publication No. 2004-526911
Patent Document 3: Japanese Laid-Open Patent Publication No. 2007-162928
Patent Document 4: Specification of US Patent No. 4022497

In the pipe fittings disclosed in Patent Documents 2 and 3, since the ferrule is located at the bottom of a cylindrical member, the ferrule is immune to damage during transportation, storage, and Installation. However, the ferrule of such a pipe fitting needs to be machined at the bottom of the cylindrical member. The machining is therefore difficult, and machining speed Is lowered.

In this regard, the pipe fitting disclosed in Patent Document 4 has a ferrule that protrudes from a shaft-like coupling member. This facilitates machining. However, as the ferrule of this pipe fitting is exposed to the outside, it Is likely to be damaged during transportation, storage, and installation.

Accordingly, it is desirable to provide a flareless pipe coupling structure that prevents a ferrule from being damaged during transportation, storage, and installation, allows the ferrule to be quickly machined, and reduces the chance of losing the ferrule when it is handled as a component. It is also desirable to provide a valve, a flareless pipe fitting, and a refrigerating device that use the flareless pipe coupling structure.

International patent application publication no. WO 2008/032564 A1 describes a bite-in type pipe joint, refrigerating apparatus and water heating device, but this publication does not disclose a protective member that is detachably held between a fitting main body and a coupling member.

The invention provides a flareless pipe coupling structure comprising a fitting main body, a coupling member threaded and mounted to the fitting main body, a ferrule tightly held between the fitting main body and the coupling member, and a protective member that Is detachably held between the fitting main body and the coupling member and protects the ferrule, wherein: the fitting main body includes a cylindrical portion having, on its inner circumferential surface, an internal thread to which the coupling member is threaded, a base portion forming a side wall of the cylindrical portion, a pipe insertion port formed in an axial portion of the base portion, and a cam surface that is formed at the entrance of the pipe insertion port and presses the distal end of the ferrule, the coupling member includes a pipe coupling portion, on its outer circumferential surface, an external thread to which the Internal thread is threaded, and a pressing surface that is formed on one side of the pipe coupling portion and presses the rear end of the ferrule, the ferrule is retained inside of and protected by the protective member in a state where the protective member is attached to the coupling member, and the protective member is formed of a partition lid that includes a cylindrical wall having a space for accommodating the ferrule and a closing wall that closes one end of the cylindrical wall and the pipe insertion port; the cylindrical wall has a first end located In the vicinity of the fitting main body, and a second end located on a side opposite to the first end; the pipe coupling portion has a first end located in the vicinity of the fitting main body; and the second end of the cylindrical wall is detachably attached to the first end of the pipe coupling portion.

In order that the invention will be more readily understood, embodiments thereof will now be described, by way of example only, in relation to the drawings, and in which: -
Fig. 1 is a partial cross-sectional view of a flareless pipe coupling structure according to a first embodiment of the present invention, illustrating a state in which a partition lid is attached to a pipe fitting with no pipe connected to the structure;
Fig. 2 is a diagram showing a state in which the ferrule and the partition lid are attached to the coupling member in the flareless pipe coupling structure of Fig. 1, where
Fig. 2(a) is a cross-sectional view showing the entire pipe fitting structure, and Fig. 2(b) shows an enlarged part 2B of Fig. 2(a);
Fig. 3 is a partial cross-sectional view of the flareless pipe coupling structure of Fig. 1, illustrating a state in which a pipe is connected to the structure;
Fig. 4 shows the fitting main body of the flareless pipe coupling structure shown in Fig. 1, where Fig. 4(a) is a side view of the fitting main body, and Fig. 4(b) is a cross-sectional view taken along line 4B-4B of Fig. 4(a);
Fig. 5 shows the coupling member of the flareless pipe coupling structure shown In Fig. 1, where Fig. 5(a) Is a side view of the coupling member, and Fig. 5(b) is a cross-sectional view taken along line 5B-5B of Fig. 5(a);
Fig. 6 shows the ferrule of the flareless pipe coupling structure shown in Fig. 1, where Fig. 6(a) is a side view of the ferrule, and Fig. 6(b) is a cross-sectional view taken along line 6B-6B of Fig. 6(a);
Fig. 7 shows the partition lid of the flareless pipe coupling structure shown in Fig. 1, where Fig. 7(a) is a side view of the partition lid, and Fig. 7(b) is a cross-sectional view taken along line 7B-7B of Fig. 7(a);
Fig. 8 is a partial cross-sectional view of the flareless pipe coupling structure of Fig. 1, illustrating a state in which connection of a pipe is complete;
Fig. 9 is a perspective view showing a specialized tool for the flareless pipe coupling structure shown in Fig. 1;
Fig. 10 is a diagram of a flareless pipe fitting pipe connection structure according to a second embodiment of the present invention, illustrating a state in which a ferrule and a partition lid are attached to a coupling member;
Fig. 11 is a diagram of a flareless pipe fitting pipe connection structure according to a third embodiment of the present invention, illustrating a state in which a ferrule and a partition lid are attached to a coupling member;
Fig. 12 is a diagram of a flareless pipe fitting pipe connection structure according to a fourth embodiment of the present invention, illustrating a state in which a ferrule and a partition lid are attached to a coupling member;
Fig. 13 is a diagram of a flareless pipe fitting pipe connection structure according to a fifth embodiment of the present invention, illustrating a state in which a ferrule and a partition lid are attached to a coupling member;
Fig. 14 is a diagram of a flareless pipe fitting pipe connection structure according to a sixth embodiment of the present invention, illustrating a state In which a ferrule and a partition lid are attached to a coupling member;
Fig. 15 is a diagram of a flareless pipe fitting pipe connection structure according to a seventh embodiment of the present invention, illustrating a state in which a ferrule and a partition lid are separated from a coupling member;
Fig. 16 Is a diagram of a flareless pipe fitting pipe connection structure according to an eighth embodiment of the present invention, illustrating a state In which a ferrule and a partition lid are attached to a coupling member; and
Fig. 17 shows the partition lid of the flareless pipe coupling structure shown In Fig. 16, where Fig. 17(a) is a side view of the pipe coupling structure, and Fig. 17(b) is a cross-sectional view taken along line 17B-17B of Fig. 17(a).

According to an embodiment of the invention, the ferrule is retained so as not to fall off the coupling member by the protective member as long as the protective member is attached to the coupling member. This allows the ferrule to be handled as a component unitized with the coupling member. When being handled as a component, the unitized ferrule is not damaged during transportation, storage, and installation. Also, the ferrule is safe from being lost. The ferrule may be machined to be separately from or Integrally with the coupling member. In either case, since ferrule does not need to be machined in a narrow space, the machining speed is increased. If the ferrule is machined to be a separate component from the coupling member, the ferrule may be formed of a single component or multiple components.

The protective member is formed of a partition lid that includes a cylindrical wall having a space for accommodating the ferrule and a closing wall that closes one end of the cylindrical wall and the pipe insertion port. The cylindrical wall has a first end located in the vicinity of the fitting main body, and a second end located on a side opposite to the first end. The pipe coupling portion has a first end located In the vicinity of the fitting main body. The second end of the cylindrical wall is detachably attached to the first end of the pipe coupling portion.

According to this configuration, the ferrule is accommodated in the cylindrical wall of the partition lid. This allows the ferrule to be reliably protected by the partition lid.

This ferrule is preferably formed as a separate member from the coupling member and unitized with the coupling member by being temporarily retained by the coupling member. In this case, the ferrule Is easy to handle as a component unitized with the coupling member.

In order to allow the second end of the cylindrical wall of the partition lid to be attached to and detached from the pipe coupling portion, a cylindrical projecting portion projecting toward the fitting main body is preferably formed on the outer circumferential surface of the first end of the pipe coupling portion, and the second end of the cylindrical wall is press fitted in the projection portion. According to this configuration, the partition lid is attached by aligning the axis of the partition lid and the axis of the coupling member, and pressing the second end of the cylindrical wall toward the cylindrical projecting portion of the coupling member. This allows the partition lid to be easily attached to the coupling member.

The cylindrical wall preferably includes one or more protrusions that extend in an axial direction on the outer circumferential surface of the second end of the cylindrical wall of the partition lid. According to this configuration, the end of the protrusions are deformed and press fitted when the partition lid is pressed against the coupling member. Therefore, the press fitting is facilitated by properly setting the shape, measurements, and number of the protrusions. Also, adequate attachment strength is ensured.

Instead of providing one or more protrusions on the outer circumferential surface of the second end of the cylindrical wall of the partition lid, the projecting portion of the pipe coupling portion may include one or more protrusions that extend In axial direction on the inner circumferential surface of the projecting portion. In this case, as in the previous case, the press fitting is facilitated by properly setting the shape, measurements, and number of the protrusions formed on the inner circumferential surface of the cylindrical projecting portion of the pipe coupling portion. Also, adequate attachment strength is ensured.

In order to allow the second end of the cylindrical wall of the partition lid to be attached to and detached from the pipe coupling portion, a cylindrical projecting portion projecting toward the fitting main body is preferably formed on the outer circumferential surface of the first end of the pipe coupling portion, and the projecting portion is press fitted in the second end of the cylindrical wall. According to this configuration, as in the previous configuration, the partition lid is easily attached by aligning the axis of the partition lid and the axis of the coupling member, and pressing the second end of the cylindrical wall toward the cylindrical projecting portion of the coupling member.

In this case, the cylindrical wall of the partition lid preferably has one or more protrusions that extend in an axial direction on the inner circumferential surface of the second end of the cylindrical wall. The press fitting is facilitated by properly setting the shape, measurements, and number of protrusions. Also, adequate attachment strength Is ensured.

Instead of providing one or more protrusions extending in an axial direction on the Inner circumferential surface of the second end of the cylindrical wall of the partition lid, the projecting portion of the pipe coupling portion may include one or more protrusions, which extend in an axial direction, on the outer circumferential surface of the projecting portion. The press fitting is facilitated by properly setting the shape, measurements, and number of protrusions. Also, adequate attachment strength is ensured.

In order to allow the second end of the cylindrical wall of the partition lid to be attached to and detached from the pipe coupling portion, a cylindrical projecting portion projecting toward the fitting main body is preferably formed on the outer circumferential surface of the first end of the pipe coupling portion, and an internal thread is preferably formed on the inner circumferential surface of the projection portion. Also, an external thread is preferably formed on the outer circumferential surface of the second end of the cylindrical wall to be threaded to the internal thread at the opening end of the projecting portion. According to this configuration, the partition lid is easily attached to the coupling member by threading the external thread formed at the end of the cylindrical wall of the partition lid to the internal thread of the cylindrical projecting portion of the pipe coupling portion.

In order to allow the second end of the cylindrical wall of the partition lid to be attached to and detached from the pipe coupling portion, a cylindrical projecting portion projecting toward the fitting main body is preferably formed on the outer circumferential surface of the first end of the pipe coupling portion, and an external thread is preferably formed on the outer circumferential surface of the projection portion. Also, an internal thread is preferably formed on the inner circumferential surface of the second end of the cylindrical wall to be threaded to the external thread at the opening end of the projecting portion. According to this configuration, the partition lid Is easily attached to the coupling member by threading the internal thread formed at the end of the cylindrical wall of the partition lid to the external thread of the cylindrical projecting portion of the pipe coupling portion.

In order to allow the second end of the cylindrical wall of the partition lid to be attached to and detached from the pipe coupling portion, a cylindrical projecting portion projecting toward the fitting main body is preferably formed on the outer circumferential surface of the first end of the pipe coupling portion, and a first annular protrusion protruding Inward is preferably formed at the opening end of the projection portion. A second annular protrusion protruding outward is preferably formed at the second end of the cylindrical wall, the second annular protrusion press fitted into the first annular protrusion. According to this configuration, the partition lid is easily attached by aligning the axis of the partition lid and the axis of the coupling member, and pressing an end of the cylindrical wall opposite to the closing wall toward the cylindrical projecting portion of the coupling member.

The first and second annular protrusions may be replaced by other structures for allowing the second end of the cylindrical wall to be attached to and detached from the pipe coupling portion. For example, a cylindrical projecting portion projecting toward the fitting main body is preferably formed on the outer circumferential surface of the first end of the pipe coupling portion, and a first annular protrusion protruding inward is preferably formed at the opening end of the projection portion, and an internal thread is preferably formed on the inner circumferential surface of the first annular protrusion. Further, a second annular protrusion protruding outward is preferably formed at the second end of the cylindrical wall, an external thread is preferably formed on the outer circumferential surface of the second annular protrusion, and the external thread is preferably threaded to the internal thread formed on the inner circumferential surface of the first annular protrusion. According to this configuration, the partition lid is easily attached to the coupling member by threading the external thread of the outer circumferential end face of the second annular projecting portion to the internal thread of the inner circumferential end face of the first annular protrusion.

In order to allow the second end of the cylindrical wall of the partition lid to be attached to and detached from the pipe coupling portion, a plurality of holes are preferably formed in the pipe coupling portion, and the holes are preferably arranged on one circumference and extending along an axial direction of the pipe connecting portion. The cylindrical wall preferably has a plurality of leg members extending along an axial direction from the second end of the cylindrical wall toward the coupling member, the leg members are preferably fitted in the holes. According to this configuration, the partition lid is attached to the coupling member by fitting the leg members extending in an axial direction from the second end of the cylindrical wall of the partition lid into the holes in the pipe coupling portion.

The ferrule is preferably formed integrally with the first end of the pipe coupling portion, and is formed to be separable from the pipe coupling portion during a pipe connecting process. In this case, since the partition lid is attached to cover the ferrule, the partition lid prevents the ferrule from being damaged.

The ferrule is preferably formed separately from the coupling member and the fitting main body, and is formed to be retainable by the pipe coupling portion. In this case also, the partition lid Is attached after the ferrule is temporarily retained by the coupling member, so that the temporarily retained ferrule is prevented from being damaged.

Herein is disclosed a valve and a pipe fitting using the above described pipe coupling structure as a pipe fitting portion are provided. This valve and pipe fitting facilitates machining and Installment of the ferrule, and thus reduce costs. Also, when being handled as a component, the ferrule Is prevented from being damaged during transportation, storage, and installation. This stabilizes the quality.

Herein is disclosed a refrigerating device using the above described valve or pipe fitting is provided. Since this refrigerating device uses the above described valve or pipe fitting, the costs of the valve or pipe fitting used In the refrigerant circuit are reduced. Also, the quality of the valve or pipe fitting is stabilized.

The partition lid functioning as a protective member retains the ferrule such that the ferrule does not fall off the coupling member. This unitizes the ferrule with the coupling member, so that the ferrule is allowed to be handled as a component. When being handled as a component, the unitized ferrule Is not damaged during transportation, storage, and installation. Also, the ferrule is safe from being lost.

### (First Embodiment)

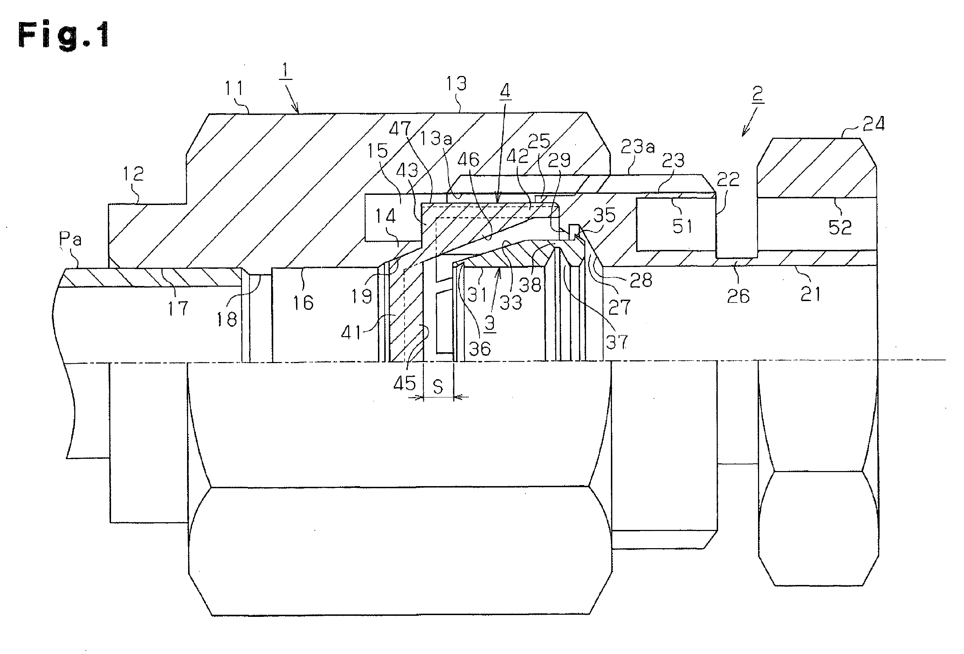

A flareless pipe coupling structure according to a first embodiment of the present invention will now be described with reference to Figs. 1 to 9.

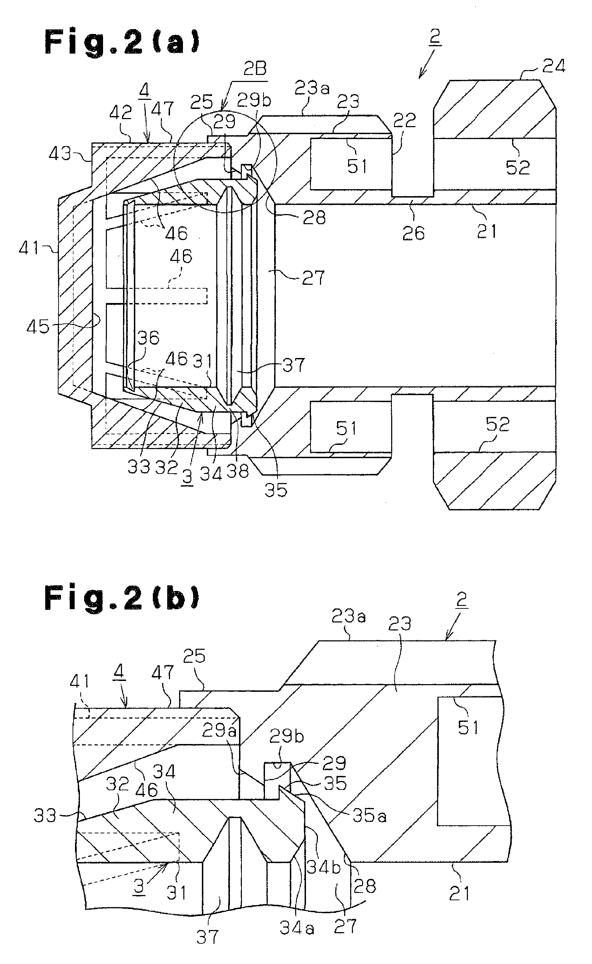

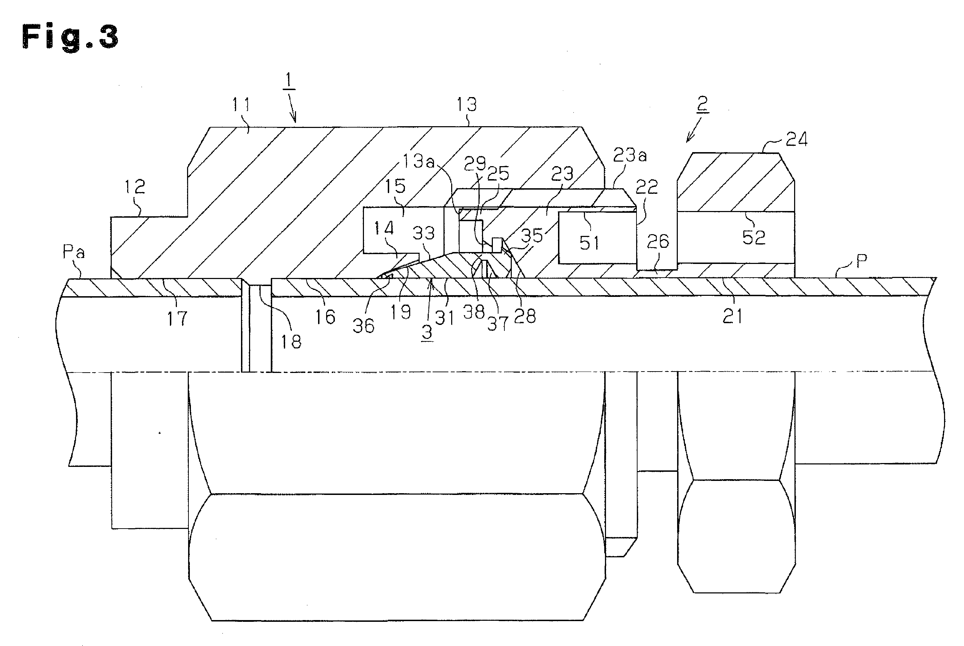

In the field of refrigerating devices such as air conditioners, a pipe coupling structure according to the first embodiment is employed as a pipe coupling portion in a flareless pipe fitting in a refrigerant circuit. The pipe coupling structure is also employed as a pipe fitting for a stop valve that connects pipes for connecting outdoor and indoor units of a separate type air conditioner. Fig. 1 is a partial cross-sectional view of a flareless pipe fitting that uses, as the pipe fitting portion, the flareless pipe coupling structure, illustrating a state in which a partition lid is attached to a pipe fitting with no pipe connected to the structure. Fig. 2 is a diagram showing a state in which a ferrule is unitized with a coupling member in the flareless pipe coupling structure, and the partition lid is attached to the coupling member to cover the ferrule. Fig. 3 is a cross-sectional view of the flareless pipe fitting, illustrating a state In which a pipe connection Is started.

As shown Figs. 1 to 3, the flareless pipe coupling structure according to the first embodiment includes a fitting main body 1 attached to a pipe Pa, a coupling member 2 threaded to the fitting main body 1, and a ferrule 3 formed separately from the fitting main body 1 and the coupling member 2. The ferrule 3 Is held tightly between the fitting main body 1 and the coupling member 2. The pipe P is connected to a target apparatus via the coupling member 2, the fitting main body 1, and the pipe Pa by attaching the pipe P (Fig. 3) to the coupling member 2. According to the flareless pipe coupling structure, when the pipe P is not connected to the coupling member 2, a resin molded partition lid 4 is held between the fitting main body 1 and the coupling member 2 so as to close a pipe insertion port 16, which will be discussed below. In the first embodiment, the partition lid 4 functions as a protective member that protects the outer circumferential surface of the ferrule 3 against damage. In the present description, the side on which the fitting main body 1 is located, or the left side in Fig. 1, is defined as a front side, while a side on which the coupling member 2 is located, or the right side in Fig. 1, is defined as the rear side.

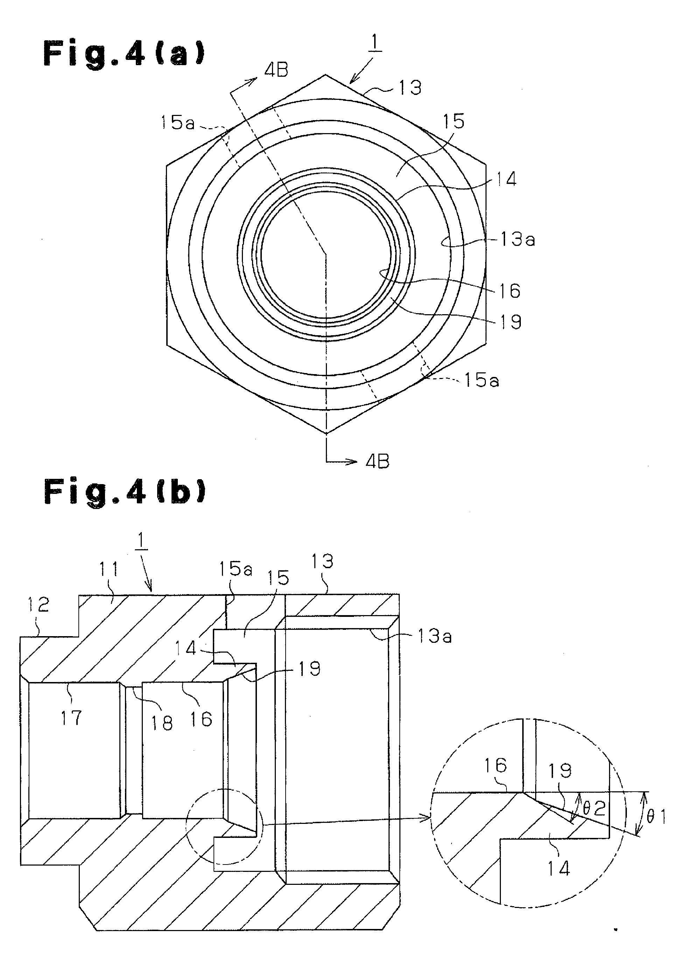

The fitting main body 1 is made of brass. As shown in Figs. 1 to 3, and 4, the fitting main body 1 has a socket portion 12 formed on the front side of a base portion 11 and a tubular portion 13 formed at the outer circumference of the rear side of the base portion 11. The fitting main body 1 also has a boss 14 at the axial rear end of the base portion 11. The fitting main body 1 protrudes into the space within the tubular portion 13. An internal thread 13a is formed on the inner circumferential surface of the tubular portion 13. The internal thread 13a serves as a thread portion of the coupling member 2. An annular space 15 is formed about the outer circumferential surface of the boss 14. The annular space 15 adjusts the strength of the boss 14 when connecting pipes. Two vents 15a for preventing the interior from freezing are formed at diagonal positions of the proximal portion of the annular space 15 (see Figs. 4(a) and 4(b).

The base portion 11 and the tubular portion 13 are integrally formed to have a hexagonal nut-like shape. A pipe insertion port 16 for receiving the pipe P is formed in the axial portion of the fitting main body 1 to extend from the base portion 11 to the boss 14. Also, a pipe insertion port 17 is formed in the axial portion of the fitting main body 1 to extend from the base portion 11 to the socket portion 12. The pipe insertion port 17 receives the pipe Pa of an apparatus-to-be-connected. A step portion 18 is formed between the pipe insertion port 16 and the pipe insertion port 17. The step portion 18 connects the ports 16 and 17 to each other and limits the positions of the pipes P and Pa. The distal ends of the Pa, Pa received in the pipe insertion ports 16, 17 contact end faces of the step portion 18, so that the positions of the distal ends of the pipes P, Pa are maintained. The front end of the step portion 18 is tapered because of the outer shape of the cutter used in machining.

A cam surface 19 is formed at the distal end of the boss 14, or at the entrance of the pipe insertion port 16. The front portion of the cam surface 19 is continuous with the pipe insertion port 16. The cam surface 19 is formed like a cone with the diameter increasing toward the rear end. The cam surface 19 is formed by two circumferential surface having different inclination angles. That is, the spreading inclination angle θ2 of a part continuous to the rear pipe insertion port 16 is formed to be larger than the spreading inclination angle θ1 at the entrance of the cam surface 19, or of the rear circumferential surface (see a partially enlarged diagram in Fig. 4(b)).

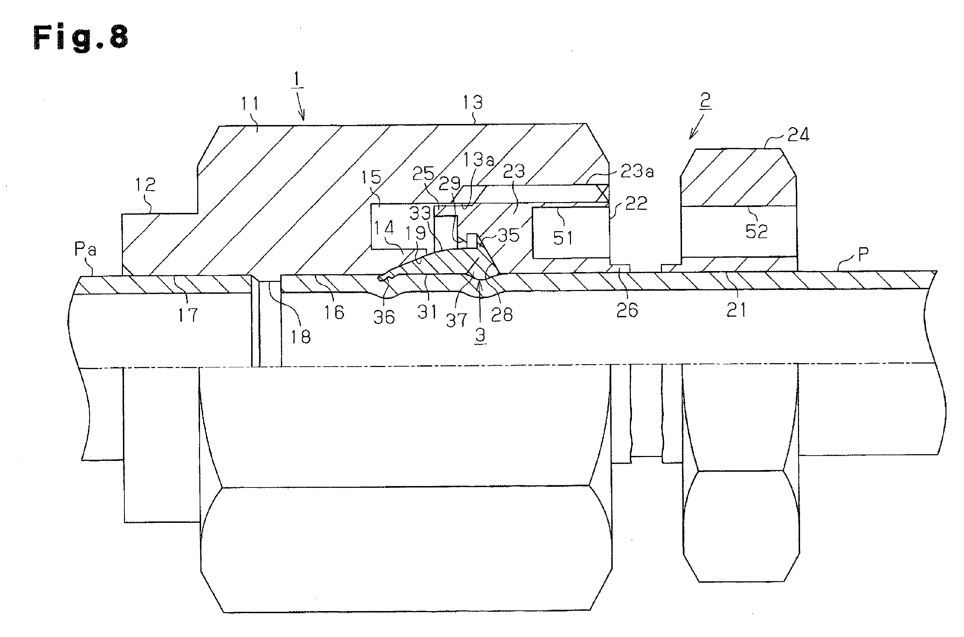

The coupling member 2 is made of brass. As shown in Figs. 1 to 3, 5(a), and 5(b), the coupling member 2 has a pipe insertion hole 21 along the axis, through which the pipe P is passed. A slit 22 having a U-shaped cross section is formed along the entire circumference of the coupling member 2, so as to divide the coupling member 2. The coupling member 2 has a pipe coupling portion 23 on the front side of the slit 22. The pipe coupling portion 23 is threaded to the fitting main body 1 and forms a pipe coupling mechanism. The coupling member 2 also includes a gripping portion 24 rearward of the slit 22. The gripping portion 24 is grippable with a common fastening tool. The position of the slit 22 in the axial direction is determined such that, when the coupling member 2 is fastened to the fitting main body 1 and the pipe connection is complete, the position of the slit 22 in the axial direction matches with the rear end face of the fitting main body 1 (see Fig. 8).

An external thread 23a is formed on the outer circumference of the pipe coupling portion 23. The external thread 23a serves as a thread portion that is threaded to the internal thread 13a of the fitting main body 1. The outer shape of the gripping portion 24 is formed like a hexagonal nut so that it is grippable with a common fastening tool. A thin tubular coupling portion 26 for connecting the pipe coupling portion 23 and the gripping portion 24, between the slit 22 and the pipe insertion hole 21. The tubular coupling portion 26 is designed to have such a strength that it is cut when the rotational torque with which the gripping portion 24 is fastened reaches the value of the rotational torque at the completion of pipe connection.

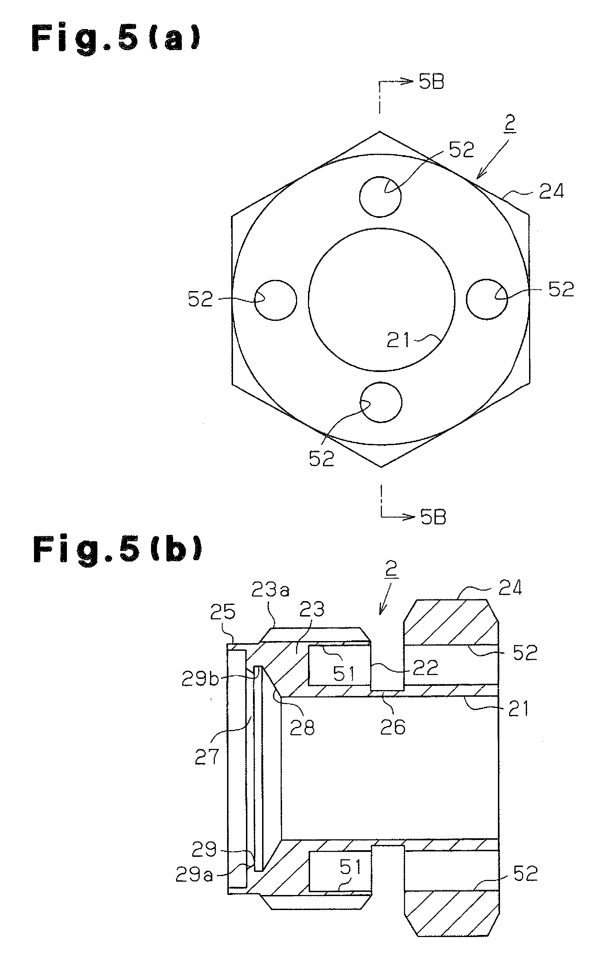

Part of a temporary retaining mechanism is formed at the front end of the pipe coupling portion 23. The temporary retaining mechanism is used for temporarily retaining the rear end of the ferrule 3. That is, a recess 27 is formed at the front end of the pipe coupling portion 23 (see Fig. 5(b)). The end face located at the bottom of the recess 27 is formed as a pressing surface 28, which presses the ferrule 3. The pressing surface 28 is an inclined surface that spreads forward. An annular protrusion 29 protruding radially inward is formed at the entrance of the recess 27. An inclined surface 29a is formed at the end face of the protrusion 29. The diameter of the inclined surface 29a increases toward the front end. The inclined surface 29a facilitates the insertion of an annular protrusion 35 formed at the rear end of the ferrule 3 Into the recess 27. The annular protrusion 35 will be discussed below. An annular increased diameter portion 29b is formed between the inward protrusion 29 and the pressing surface 28.

A cylindrical projecting portion 25 is formed at the outer circumference of the front end of the pipe coupling portion 23. The projecting portion 25 projects forward from the front end of the pipe coupling portion 23 and functions as a part of a mechanism for detachably attaching a partition lid 4, which is a characteristic of embodiments of the present invention. The projecting portion 25 is formed to have such a length that an end of a cylindrical wall 42 of the partition lid 4 can be fitted inside the projecting portion 25 so that the partition lid 4 can be fixed.

Four circular engaging holes 51 having a predetermined depth are formed in the rear end face of the pipe coupling portion 23. The engaging holes 51 engage with a specialized tool, which will be discussed below. Four machining holes 52 are formed through the gripping portion 24. The machining holes 52 allow the engaging holes 51 to be machined from the rear of the gripping portion 24. The machining holes 52 are located at positions that face the engaging holes 51. As shown in Fig. 5, the machining holes 52 are spaced at equal intervals along a circumference.

The ferrule 3 is made of brass. As shown in Figs. 1 to 3, 6(a), and 6(b), the ferrule 3 is an independent type that is formed separately from the fitting main body 1 and the coupling member 2. The ferrule 3 is annular with a insertion hole 31 for receiving the pipe P. In the cross-section along the axis, the outer circumferential surface of a front portion of the ferrule 3 is formed as a tapered surface 33 with a decreasing diameter toward the front end. The outer circumferential surface of a rear portion of the ferrule 3 is formed as a cylindrical parallel surface substantially parallel with the axis.

The tapered surface 33 forming the outer circumferential surface of the front portion 32 is inclined relative to the axis by an angle smaller than the spreading angle [theta]1 of the conical portion at the rear of the cam surface 19. This allows the distal end of the ferrule 3 to be easily bent and increases the contact area between the cam surface 19 and the tapered surface 33.

The annular protrusion 35 protruding radially outward is formed at the rear end of the ferrule 3. The annular protrusion 35 is a part of the temporary retaining mechanism for the ferrule 3. An inclined surface 35a is formed at the outer circumferential end face of the protrusion 35. The inclined surface 35a has a diameter that decreases toward the rear end, so that the protrusion 35 of the rear end 34 of the ferrule 3 is easily press fitted in the increased diameter portion 29b of the coupling member 2 (see Fig. 2(b)). The maximum diameter of the protrusion 35 is slightly larger than the inner diameter of the annular protrusion 29, which protrudes radially inward in the coupling member 2. Accordingly, the protrusion 35 is pressed into the increased diameter portion 29b via the protrusion 29, which protrudes radially inward, due to the deformation caused when press fitted. The axial dimension of the protrusion 35 is slightly less than the axial dimension of the increased diameter portion 29b.

The temporary retaining mechanism of the ferrule 3 is configured as described above at the front end of the pipe coupling portion 23 and the rear end of the ferrule 3. Accordingly, the rear end of the ferrule 3 is temporarily retained by the coupling member 2 so as to be detachably attached to the recess 27 formed at the front end of the coupling member 2. Thus, the ferrule 3 can be transported in a unitized state. The unitized ferrule 3 can be installed to the fitting main body 1.

The rear end face of the ferrule 3 is a pressure receiving surface that is pressed by the pressing surface 28. An inclined surface 34a and a vertical surface 34b are formed at the rear end face of the ferrule 3. The inclined surface 34a is formed in a center and inclined forward. The vertical surface 34b is formed at the outer circumference and perpendicular to the center axis. A corner at the intersection of the inclined surface 34a and the insertion hole 31 forms a rear edge portion.

The ferrule 3 has a first notch 36 and a second notch 37, which are incisions from the inner circumferential surface of the insertion hole 31 toward the outer circumference. The first notch 36 is formed at the distal end in the axial direction of the ferrule 3, and the second notch 37 is formed at the rear portion in the axial direction of the ferrule 3. The first notch 36 facilitates deformation of the distal portion forward of the first notch 36. The first notch 36 has a V shaped cross section. In the first notch 36, a corner at the intersection of the rear end face of the incision and the insertion hole 31 forms a front edge portion.

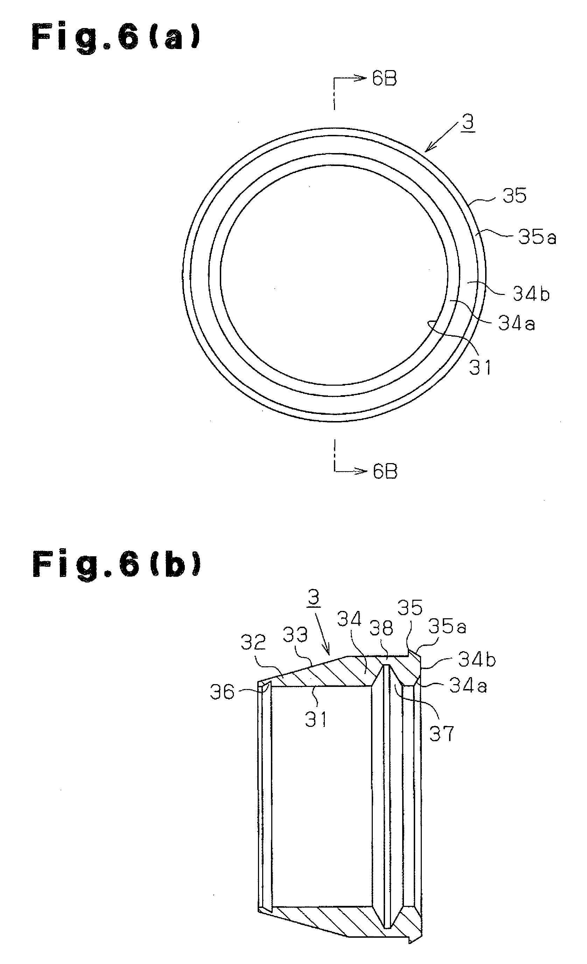

The second notch 37 is formed between the first notch 36 and the rear end face along the axial direction, in a position closer to the rear end face. The second notch 37 has a V shaped cross section. As shown in Figs. 2 and 6, thin portion 38 is formed in the ferrule 3 in a position between the bottom of the second notch 37 and the outer circumferential surface of the ferrule 3. An inclined surface 34a is formed on the rear end face of the ferrule 3. The thin portion 38 serves as a hinge to allow portions forward of and rearward of the thin portion 38 to be easily bent toward the axis. This readily allows the tapered surface 33 in the front portion 32 of the ferrule 3 to closely contact the cam surface 19, and the rear edge portion at the rear end of the ferrule 3 to easily bite into the pipe P.

When transported or stored as a component, the ferrule 3 described above is unitized with the coupling member 2 as shown in Fig. 2 with the rear end being temporarily retained by the coupling portion 2. To unitize the ferrule 3 with the coupling member 2, the rear end of the ferrule 3 is pressed against the recess 27 of the coupling member 2 with the center axis of the ferrule 3 and the center axis of the coupling member 2 being aligned with each other. This causes the inclined surface 35a of the protrusion 35 of the ferrule 3 and the inclined surface 29a of the protrusion 29 of the coupling member 2 to contact each other. Subsequently, the rear end of the ferrule 3 is press fitted into the recess 27 while being deformed. At this time, the protrusion 35 of the ferrule 3 is slightly reduced in diameter and inserted into the increased diameter portion 29b. After being inserted into the increased diameter portion 29b, the protrusion 35 returns to a free state. Thus, the outer diameter of the protrusion 35 then becomes slightly larger than the inner diameter of the inward protrusion 29 of the coupling member 2. In this manner, the ferrule 3 is temporarily retained. During transportation, the temporarily retaining of the ferrule 3 remains retained. However, since the inward protrusion 29 and the outward protrusion 35 engage with each other in a small area, the ferrule 3 can be detached from the coupling member 2.

The partition lid 4 will now be described with reference to Figs. 1, 2, and 7.

The partition lid 4 is used for airtightly closing the pipe insertion port 16 of the fitting main body 1 when the pipe P is not connected. The partition lid 4 is integrally molded of resin. The partition lid 4 includes a disc-like closing wall 41 for closing the pipe insertion port 16, and a cylindrical wall 42 having a space for accommodating the ferrule 3. The closing wall 41 serves as a side wall of the cylindrical wall 42. The partition lid 4 has a sealing wall 43 located on the outer surface to form a portion for coupling the closing wall 41 to the cylindrical wall 42. The sealing wall 43 closely contacts the cam surface 19 and a wall surface perpendicular to the axis of the entrance of the cam surface 19. In the present embodiment, the wall surface perpendicular to the axis of the entrance of the cam surface 19 is the rear end face of the boss 14.

The sealing wall 43 includes a conical wall 43a and an annular wall 43b. The conical wall 43a has an outer surface along the cam surface 19, and the annular wall 43b is perpendicular to the axis. The sealing wall 43 is located inside of the sealing wall 43, and the annular wall 43b is located outside of the sealing wall 43. The inner circumferential portion of the conical wall 43a is connected to the outer circumferential portion of the closing wall 41, and the outer circumferential portion of the annular wall 43b is perpendicular to and connected to the end of the cylindrical wall 42. The outer surface of the conical wall 43a is formed as an inclined surface of a certain angle that conforms to the cam surface 19.

The front surface of the closing wall 41 configured as described above receives high gas pressure from the interior of the pipe insertion port 16 during an airtightness test or a pressure test. Therefore, the closing wall 41 is deformed to bulge toward the coupling member 2. Thus, parts that require strength including the closing wall 41 are preferably formed to be thick. However, for example, if the closing wall 41 is formed to be thick, the axial dimension of the pipe coupling structure is increased, accordingly. If the thickness of the closing wall 41 is partially increased, the flow of resin can be hindered during the resin molding.

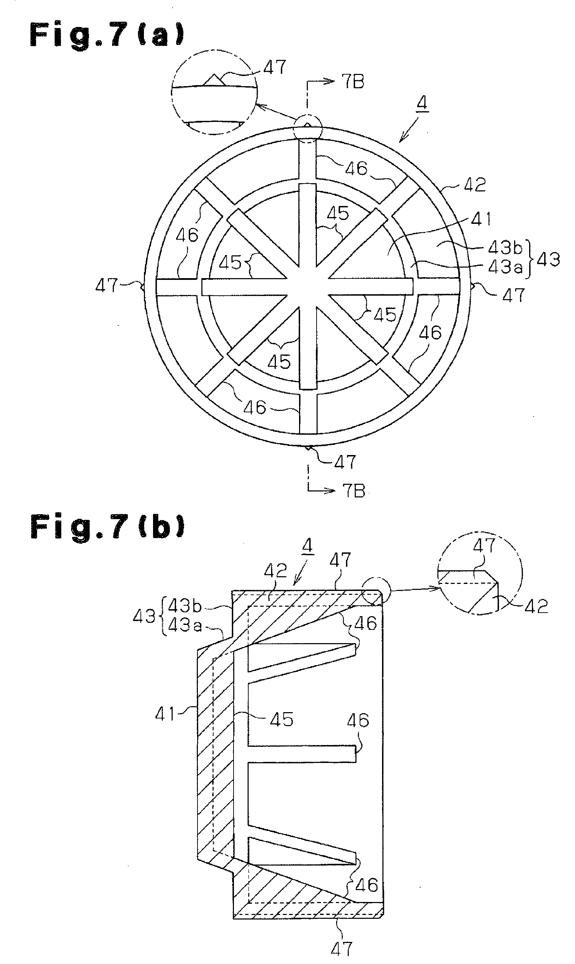

Thus, in the present embodiment, radially extending eight reinforcing ribs 45 are formed on the rear surface of the closing wall 41 as shown in Fig. 7. The outer end face of each reinforcing rib 45 is connected to the conical wall 43a of the sealing wall 43. This increases the strength of the closing wall 41 and the coupling strength between the closing wall 41 and the conical wall 43a. Triangular reinforcing ribs 46 are formed at corners where the annular wall 43b of the sealing wall 43 and the cylindrical wall 42. The triangular reinforcing ribs 46 are located at the same angular positions as the radial reinforcing ribs 45. Each reinforcing rib 46 has two sides that are perpendicular to each other. One of the perpendicular sides is connected to the annular wall 43b, and the other side is connected to the cylindrical wall 42. The reinforcing rib 46 increases the strength of the corners where the annular wall 43b and the cylindrical wall 42 are connected to each other.

The partition lid 4 is detachably attached to the front end face of the pipe coupling portion 23 so as to cover the outer surface of the ferrule 3, which is temporarily retained at the front end of the pipe coupling portion 23 as described above. To achieve the attachment, the rear end of the cylindrical wall 42 is fitted in the projecting portion 25 formed at the outer circumference of the end face of the pipe coupling portion 23. To facilitate and ensure the fitting attachment of the partition lid 4, linear protrusions 47 are formed on the outer circumferential surface of the cylindrical wall 42. The linear protrusions 47 have a triangular cross section and are arranged at equal intervals over the circumference. The linear protrusions 47 extend over the entire axial direction of the cylindrical wall 42. The rear edge of each linear protrusion 47 is chamfered as shown in the partially enlarged section of Fig. 7(b). The partition lid 4, which is attached in the above described manner, also functions as a protective member for protecting the ferrule 3. The protective member for protecting the ferrule 3 refers to a member that covers the outer surface of the ferrule 3 to prevent the outer circumferential surface of the ferrule 3 from being damaged, but does not function for closing the pipe insertion port 16.

The method for assembling the thus configured partition lid 4 will now be described.

When being handled as a component of the coupling member 2 and the ferrule 3, the partition lid 4 is attached to the coupling member 2, which is unitized with the temporarily retained ferrule 3. The partition lid 4 is detachably attached to the coupling member 2 by fitting the rear end of the cylindrical wall 42 into the cylindrical projecting portion 25 formed in the pipe coupling portion 23. When the partition lid 4 Is attached to the coupling member 2 in this manner, the ferrule 3 is accommodated inside the partition lid 4. Therefore, when the coupling member 2, with which the ferrule 3 is unitized, can be stored or transported as a single component, and the ferrule 3 is prevented from being damaged.

The fitting main body 1 is attached to an apparatus-to-be-connected as a pipe coupling structure until the pipe P is connected. A process is executed for fastening the coupling member 2 to the fitting main body 1 so as to hold the partition lid 4.

The coupling member 2, to which the ferrule 3 and the partition lid 4 are attached as described above, is fastened to the fitting main body 1. At this fastening process, the outer surface of the conical wall 43a of the sealing wall 43 of the partition lid 4 contacts the cam surface 19 of the fitting main body 1. Also, the front surface of the annular wall 43b of the sealing wall 43 contacts a wall perpendicular to the axis of the outer circumference at the entrance of the cam surface 19 (that is, the rear end face of the boss 14 in the present embodiment). At the same time, the external thread 23a of the coupling member 2 is threaded to the internal thread 13a of the fitting main body 1, so that the coupling member 2 Is fastened to the fitting main body 1. The tightening torque for fastening the coupling member 2 to the fitting main body 1 is measured by appropriate means such as a torque meter and adjusted to a predetermined tightening torque.

By fastening the coupling member 2 to the fitting main body 1 in this manner, the outer surface of the sealing wall 43 of the partition lid 4 closely contacts the cam surface 19 and the rear end face of the boss 14 with the ferrule 3 being covered by the partition lid 4. Also, the rear end face of the cylindrical wall 42 closely contacts the front end face of the pipe coupling portion 23, so that the partition lid 4 is held between the fitting main body 1 and the coupling member 2. As a result, the pipe insertion port 16 is airtightly sealed by the closing wall 41 (refer to Fig. 1). During an airtightness test or a pressure test of the apparatus-to-be-connected, the closing wall 41 is deformed to bulge toward the coupling member 2 by the gas pressure. Thus, to prevent the ferrule 3 from being pushed by the closing wall 41, a space S is provided between the closing wall 41 and the distal end of the ferrule 3 to allow the bulging of the closing wall 41 (see Fig. 1).

The pipe connecting method will now be described. The method is executed from the state of Fig. 1, in which the partition lid 4 is attached to the coupling member 2, to the state of Fig. 8, in which the pipe connection is completed.

When connecting the pipe P using the fitting main body 1 and the coupling member 2, the partition lid 4 is removed by loosening the coupling member 2 fastened to the fitting main body 1. By being pulled outward along the axial direction, the partition lid 4 attached to the coupling member 2 is pulled out of the interior of the cylindrical projecting portion 25, into which the rear end of the cylindrical wall 42 has been fitted. This removes the partition lid 4 from the coupling member 2. Next, the pipe P to be connected is passed through the pipe insertion hole 21 of the coupling member 2, which temporarily retains the ferrule 3, and the insertion hole 31 of the ferrule 3, so that the coupling member 2 is attached to the outside of the pipe P. In this attaching process, the pipe P may be attached in a state where the coupling member 2, which temporarily retains the ferrule 3, is separated from the fitting main body 1. Alternatively, the pipe P may be inserted into the pipe insertion hole 21 from the rear of the coupling member 2 in a state where the coupling member 2, which temporarily retains the ferrule 3, is loosely screwed to the fitting main body 1. The distal end of the pipe P is inserted into the pipe insertion port 16 through the insertion hole 31 of the ferrule 3. Further, the distal end of the pipe P contacts the end face of the step 18. In this state, the coupling member 2 is fastened to the fitting main body 1. Threading of the coupling member 2 causes the rear end of the ferrule 3 to contact the pressing surface 28 as shown in Fig. 3.

In this state, the coupling member 2 is rotated manually and fastened, so that the distal portion of the ferrule 3 forward of the first notch 36 enters between the pipe P and the pipe insertion port 16 in a wedge-like manner, so as to temporarily retain the pipe P. Then, the coupling member 2 is fastened further. Since the pressing surface 28 is an inclined surface that spreads forward, sections forward of and rearward of the thin portion 38 are easily bent toward the axis. Therefore, the ferrule 3 is inclined about the thin portion 38, so that the front edge bites into the pipe P in a front portion of the second notch 37. Also, the ferrule 3 is inclined about the thin portion 38, so that the rear edge bites into the pipe P in a rear portion of the second notch 37 (see Fig 8).

When the bite amount of the front and rear edges of the ferrule 3 reaches a predetermined level, the end face of the tubular portion 13 and the front surface of the slit 22 are substantially flush with each other as shown in Fig. 8. When the coupling member 2 is fastened to reach this level, the rotation torque reaches a predetermined value. At this time, the tubular coupling portion 26 is cut so that the gripping portion 24, which protrudes from the tubular portion 13, is separated. The connecting procedure for the coupling member 2 is thus completed.

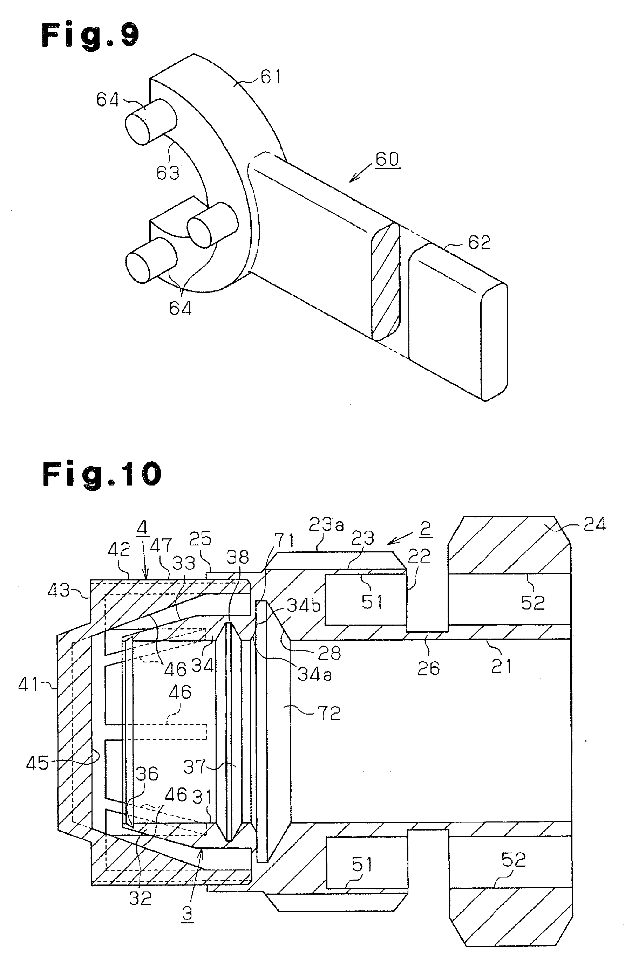

In the pipe coupling portion fastened in the above described manner, the gripping portion 24 is separated. Thus, the connecting portion is prevented from being loosened by anybody. However, by using a specialized tool as shown in Fig. 9, the pipe coupling portion can be loosened.

As shown in Fig. 9, the specialized tool 60 includes a semi-circular base portion 61 and a handle 62 attached to the base portion 61. The inner diameter of an arcuate portion 63 of the base portion 61 is slightly larger than the outer diameter of the pipe P. Three columnar engaging projections 64 are formed on a side of the base portion 61. The engaging projections 64 are engaged with the engaging holes 51 of the pipe coupling portion 23. The engaging projections 64 are engageable with any consecutive three of the four engaging holes 51 of the pipe coupling portion 23.

The three engaging projections 64 of the specialized tool 60 are each fitted in one of any three consecutive engaging holes 51 of the pipe coupling portion 23. Thereafter, by applying some force to the handle 62 of the specialized tool 60 to rotate the base portion 61, the pipe coupling portion 23 is rotated to loosen the threaded fitting main body 1. This allows the pipe P to be removed from the fitting main body 1. According to this method for disconnecting pipes, the pipe P can be disconnected without being cut, and thus simplifies the pipe disconnecting operation. Also, the pipe P is removed without removing the fitting main body 1. Then, the ferrule 3, which is temporarily retained by the coupling member 2 is pulled out. Using a new ferrule 3, the pipe P is connected to the fitting main body 1 again.

The flareless pipe coupling structure according to the first embodiment, which has the partition lid 4 configured as described above, provides the following advantages.
(1) The ferrule 3 is produced as a component separate from the fitting main body 1 and the coupling member 2, and is then temporarily retained by the coupling member 2. This facilitates and increases the speed for machining of the ferrule 3.
(2) After the ferrule 3 is temporarily retained by the coupling member 2, the partition lid 4 is attached to the coupling member 2 so as to cover the ferrule 3. When the ferrule 3 and the coupling member 2 are transported or stored as a unitized component, or when the ferrule and the coupling member 2 are installed on the fitting main body 1 as a unitized component, the outer surface of the ferrule 3 is not damaged.
(3) The partition lid 4 is easily attached to the coupling member 2 by aligning the axis of the partition lid 4 and the axis of the coupling member 2, and pressing the rear end of the cylindrical wall 42 toward the cylindrical projecting portion 25 of the coupling member 2.
(4) The partition lid 4 has the linear protrusions 47, which are located on the outer circumferential surface of the rear end of the cylindrical wall 42 and extend along the axial direction. The ends of the linear protrusions 47 are press fitted and attached to the inner circumferential surface of the cylindrical projecting portion 25 of the pipe coupling portion 23. Therefore, the press fitting is facilitated by properly setting the shape and the measurements of the linear protrusions 47. Also, adequate attachment strength is ensured.
(5) A valve and a pipe fitting using the above described pipe coupling structure as a pipe fitting portion improves the workability and installability, and thus reduces costs.
(6) In a refrigerating device that uses the valve and the pipe fitting in the refrigerant circuit, costs for the valve and pipe fitting in the refrigerant circuit are reduced. Also, the valve and the pipe fitting are prevented from failing due to damage to the ferrule 3.

Other embodiments of the present invention will now be described. The same reference numerals are given to those components that are the same as the corresponding components of the first embodiment.

### (Second Embodiment)

A second embodiment will now be described with reference to Fig. 10.

The second embodiment is different from the first embodiment in that the ferrule 3 and the coupling member 2 are formed as an integral component. In this case, the rear end of the ferrule 3 and the front end of the pipe coupling portion 23 of the coupling member 2 are unitized with a thin portion 71 in between. The recess 27 between the rear end face of the ferrule 3 and the pressing surface 28 of the first embodiment is replaced by a space 72.

This ferrule 3, which is formed as an integral component with the coupling member 2, is separated from the coupling member 2 at the thin portion 71 during a pipe connecting process in which the coupling member 2 is fastened to the fitting main body 1. After being separated, the ferrule 3 of the second embodiment functions in the same manner as the ferrule 3 of the first embodiment, so as to connect the pipe P. Also, a large space about the ferrule in the second embodiment facilitates and increases the speed of the machining of the ferrule 3, as in the first embodiment.

### (Third Embodiment)

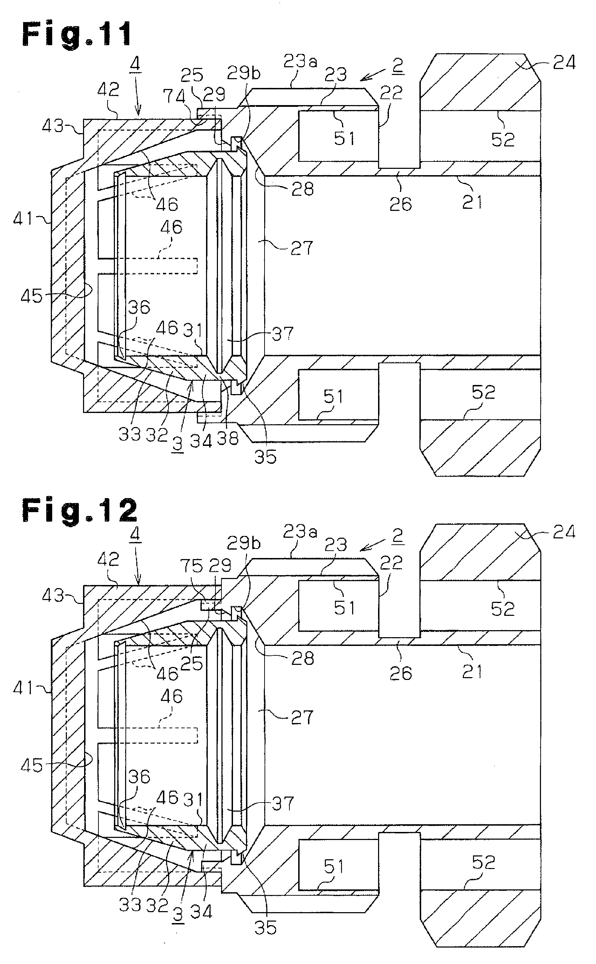

A third embodiment will now be described with reference to Fig. 11.

In the first embodiment, the four linear protrusions 47 are formed on the outer circumferential surface of the rear end of the closing wall 41 in the cylindrical wall 42 of the partition lid 4. Instead, four linear protrusions 74 are formed on the inner circumferential surface of the cylindrical projecting portion 25 of the pipe coupling portion 23 in the third embodiment. The linear protrusions 74 each have a triangular cross section and are arranged at equal intervals on the inner circumferential surface of the projecting portion 25. The linear protrusions 74 have the same function as that of the linear protrusions 47 of the first embodiment. The press fitting of the partition lid 4 is facilitated by properly setting the shape and the measurements of the linear protrusions 47. Also, adequate attachment strength is ensured.

### (Fourth Embodiment)

A fourth embodiment will now be described with reference to Fig. 12.

The fourth embodiment is different from the third embodiment in the structure of the projecting portion 25. That is, in the third embodiment, the rear end of the cylindrical wall 42 of the partition lid 4 is fitted in the projecting portion 25. However, in the fourth embodiment, a cylindrical projecting portion 25 at the end of the pipe coupling portion 23 has a slightly smaller diameter than that of the third embodiment. Also, linear protrusions 75 are provided on the outer circumferential surface of the cylindrical projecting portion 25. The rear end of the cylindrical wall 42 is fitted to the outer circumference of the cylindrical projecting portion 25. Even according to this configuration, the partition lid 4 can be fixed to the coupling member 2 by fitting the cylindrical wall 42 and the projecting portion 25 together substantially in the same manner as the third embodiment.

### (Fifth Embodiment)

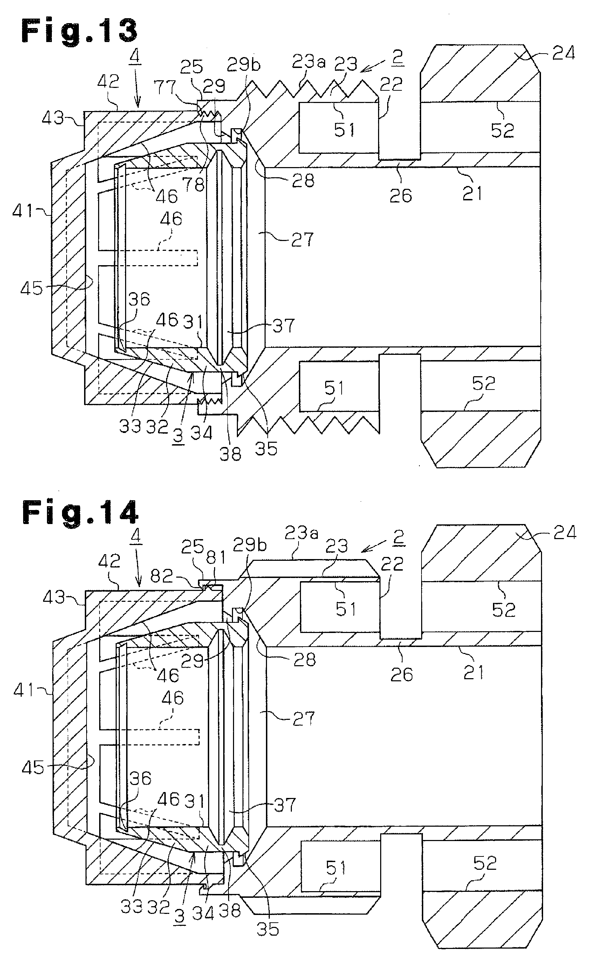

A fifth embodiment will now be described with reference to Fig. 13.

Unlike the first embodiment, in which the cylindrical wall 42 and the projecting portion 25 are fitted together, these are threaded to each other in the fifth embodiment. That is, in the fifth embodiment, an external thread 77 is formed on the outer circumferential surface of the rear end of the cylindrical wall 42 of the partition lid 4, as shown in Fig. 13. Also, an internal thread 78 for threading with the external thread 77 is formed on the inner circumferential surface of the cylindrical projecting portion 25 of the pipe coupling portion 23. According to this configuration, the partition lid 4 is easily attached to the coupling member 2 by threading the external thread 77 formed at the end of the cylindrical wall 42 of the partition lid 4 to the internal thread 78 of the cylindrical projecting portion 25 of the pipe coupling portion 23.

### (Sixth Embodiment)

A sixth embodiment will now be described with reference to Fig. 14.

Unlike the first embodiment, in which the cylindrical wall 42 and the projecting portion 25 are coupled to each other by being fitted together, these are coupled to each other by press fitting and deformation in the sixth embodiment. That is, in the sixth embodiment, an annular protrusion 81 protruding radially outward is formed on the outer circumferential surface near the rear end of the cylindrical wall 42 of the partition lid 4, as shown in Fig. 14. Also, an annular protrusion 82 protruding radially inward is formed on the inner circumferential surface of the opening end of the cylindrical projecting portion 25 of the pipe coupling portion 23. Like the temporary retaining of the rear end of the ferrule 3, the annular protrusion 81 protruding radially outward is press fitted inside of the annular protrusion 82 protruding radially inward, while being deformed. The partition lid 4 is easily attached to the coupling member 2 by aligning the axis of the partition lid 4 and the axis of the coupling member 2, and pressing the rear end of the cylindrical wall 42 toward the cylindrical projecting portion 25 of the coupling member 2.

### (Seventh Embodiment)

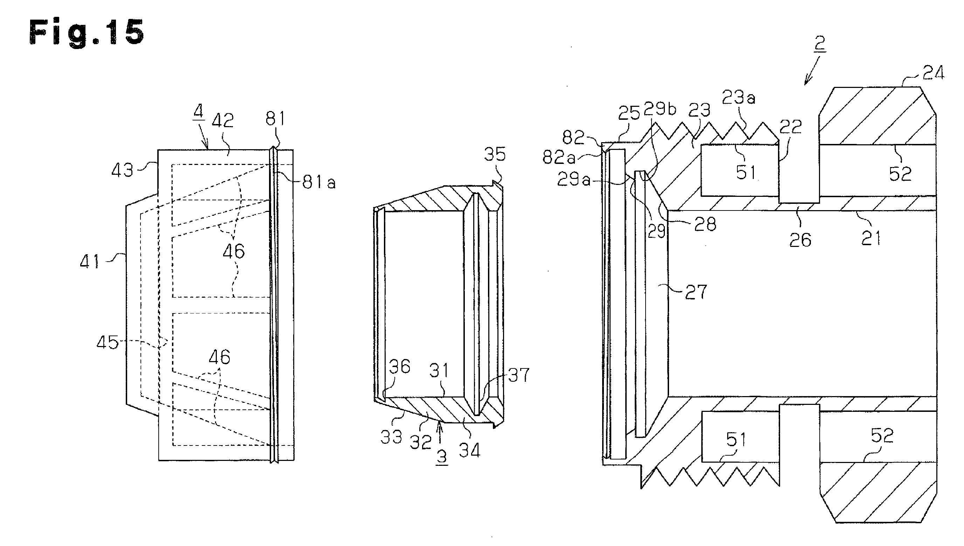

A seventh embodiment will now be described with reference to Fig. 15. Fig. 15 is a diagram of a flareless pipe fitting pipe connection structure according to a seventh embodiment of the present invention, illustrating a state in which a ferrule and a partition lid are separated from a coupling member.

The seventh embodiment is different from the sixth embodiment in that the annular protrusions 81, 82 are attached to each other via threading. That is, in the seventh embodiment, an internal thread 82a is formed on the Inner circumferential surface of the annular protrusion 82 protruding radially Inward. An external thread 81 a to be threaded to the internal thread 82a is formed on the outer circumference of the annular protrusion 81 protruding radially outward. Therefore, according to the seventh embodiment, the external thread 81a is threaded to the internal thread 82a, so that the annular protrusion 81 is inserted toward the bottom of the annular protrusion 82. The partition lid 4 is therefore easily attached to the coupling member 2.

### (Eighth Embodiment)

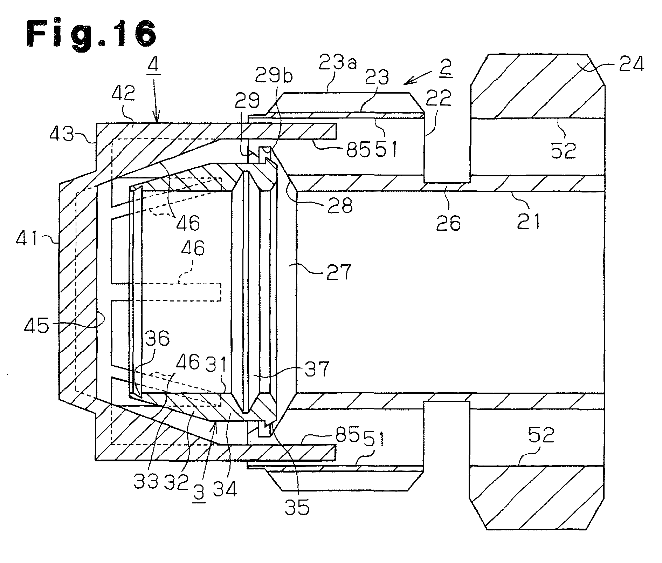

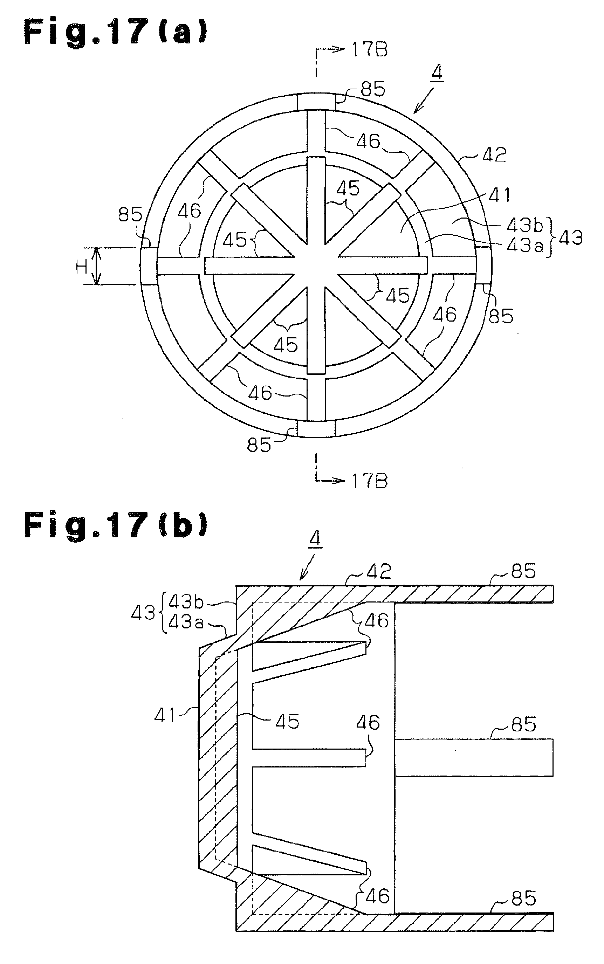

An eighth embodiment will now be described with reference to Figs. 16 and 17.

In the eighth embodiment, leg members 85 are formed at the rear end of the cylindrical wall 42 of the partition lid 4. The leg members 85 protrude In the axial direction toward the coupling member 2. The leg members 85 are fitted In axially extending holes formed in the pipe coupling portion 23. The engaging holes 51 are used as the holes for receiving the leg members 85. In this case, the engaging holes 51 extend along the axial direction through the pipe coupling portion 23, so that the legs 85 can be inserted from front of the engaging holes 51. The leg members 85 are formed to have a width H (see Fig. 17(a)) for fitting in the engaging holes 51. According to this structure, the legs 85 extending in the axial direction from the end of the cylindrical wall 42 of the partition lid 4 are fitted in the engaging holes 51, which extend In the axial direction In the pipe coupling portion 23. This allows the partition lid 4 to be detachably attached to the coupling member 2.

### (Modifications)

The above embodiments may be modified as follows.

The structure attaching the partition lid 4 to the coupling member 2 is not limited to those discussed in the above embodiments, as long as the partition lid 4 can be detachably attached.

In cases where the ferrule 3 is a component separate from the fitting main body 1 and the coupling member 2, the structure for unitizing the ferrule 3 and the coupling member 2 is not limited to the press fitting structure as in the above embodiments. For example, like the structures for attaching the partition lid 4 and the coupling member 2 to the pipe coupling portion 23 disclosed In the above embodiments, the unitizing structure for the ferrule 3 may be another structural arrangement, such as screwing.

In the above embodiments, the ferrule 3 is first formed as a component separate from the coupling member 2, and is then either temporarily retained by the coupling member 2 or formed integrally with the coupling member 2. However, like a conventional independent ferrule, the ferrule 3 may be held between the fitting main body 1 and the coupling member 2 without being temporarily retained by the coupling member 2. In this case, the ferrule 3 may be formed of either a single component or multiple components. As long as the partition lid 4, which serves as a protective member, is attached to the coupling member 2, the ferrule 3 is retained by the partition lid 4 so as not to fall off the coupling member 2.

In the first to fourth embodiments, the shape, dimensions, and number of linear protrusions 47, 74, 75 may be changed as necessary to ensure the ease of fitting and adequate attachment strength between the cylindrical wall 42 of the partition lid 4 and the cylindrical projecting portion 25. The linear protrusions 47, which have a triangular cross section may be replaced by protrusions having a different shaped cross section.

In the fourth embodiment, the linear protrusions 75 are formed on the outer circumferential surface of the cylindrical projecting portion 25 of the pipe coupling portion 23. Instead of the linear protrusions 75, linear protrusions may be formed on the Inner circumferential surface of the cylindrical wall 42 of the partition lid 4. The strength for fitting the cylindrical wall 42 may be adjusted by properly selecting the shape, dimensions, and number of linear protrusions 75.

In the fourth embodiment, the rear end of the cylindrical wall 42 of the partition lid 4 and the projecting portion 25 are engaged with each other. However, as in the fifth embodiment, the rear end of the cylindrical wall 42 and the projecting portion 25 may be coupled together via threading.

In the eighth embodiment, the axially extending holes for receiving the leg members 85 also function as the engaging holes 51 with which the engaging projections 64 of the specialized tool 60 are engaged. Instead, axially extending holes for receiving the leg members 85 may be formed in the coupling member 2 In addition to the engaging holes 51. The strength for fitting the leg members 85 may be adjusted by properly selecting the shape, dimensions, and number of the leg members 85 and the axially extending holes.

The pipe Pa of the apparatus-to-be-connected Is brazed to the socket portion 12 of the fitting main body 1. Instead, an external thread may be formed on the outer circumference of the socket portion 12, and the fitting main body 1 may be directly attached to a device such as a stop valve in the apparatus-to-be-connected.

The coupling member 2 may be configured such that it is not divided into the pipe coupling portion 23 and the gripping portion 24 when the connection of the pipe P is complete.

The flareless pipe coupling structure of the present invention may be applied to a refrigerant circuit, water circuit, gas circuit in a refrigerating device, air conditioner, water heating device such as a water heater, water supply device, and production facility. The flareless pipe coupling structure of the present invention may be applied to a pipe fitting portion in various devices, other than connection between pipes and pipe fitting portions in valves such as stop valves. Further, the flareless pipe coupling structure of the present invention may be applied to metal pipes such as copper pipes and stainless steel pipes, and resin pipes.

## Claims

1. A flareless pipe coupling structure, comprising a fitting main body (1), a coupling member (2) threaded and mounted to the fitting main body (1), a ferrule (3) tightly held between the fitting main body (1) and the coupling member (2), and a protective member (4) that is detachably held between the fitting main body (1) and the coupling member (2) and protects the ferrule (3), wherein:
the fitting main body (1) Includes a cylindrical portion (13) having, on its inner circumferential surface, an Internal thread (13a) to which the coupling member (2) is threaded, a base portion (11) forming a side wall of the cylindrical portion (13), a pipe insertion port (16, 17) formed in an axial portion of the base portion (11), and a cam surface that is formed at the entrance of the pipe insertion port (16, 17) and presses the distal end of the ferrule (3),
the coupling member (2) includes a pipe coupling portion (23), on its outer circumferential surface, an external thread (23a) to which the internal thread (13a) is threaded, and a pressing surface (28) that is formed on one side of the pipe coupling portion (23) and presses the rear end of the ferrule (3),
the ferrule (3) Is retained Inside of and protected by the protective member (4) in a state where the protective member (4) Is attached to the coupling member (2), and
the protective member is formed of a partition lid (4) that includes a cylindrical wall (42) having a space for accommodating the ferrule (3) and a closing wall (41) that closes one end of the cylindrical wall (42) and the pipe insertion port (16, 17); the cylindrical wall (42) has a first end located in the vicinity of the fitting main body (1), and a second end located on a side opposite to the first end; the pipe coupling portion (23) has a first end located in the vicinity of the fitting main body (1); and the second end of the cylindrical wall (42) is detachably attached to the first end of the pipe coupling portion (23).

2. The flareless pipe coupling structure according to claim 1, wherein the ferrule (3) Is formed as a separate member from the coupling member (2) and unitized with the coupling member (2) by being temporarily retained by the coupling member (2).

3. The flareless pipe coupling structure according to claim 2, wherein:
in order to allow the second end of the cylindrical wall (42) of the partition lid (4) to be attached to and detached from the pipe coupling portion (23),
a cylindrical projecting portion (25) projecting toward the fitting main body (1) is formed on the outer circumferential surface of the first end of the pipe coupling portion (23), and the second end of the cylindrical wall (42) is press fitted in the projecting portion (25).

4. The flareless pipe coupling structure according to claim 3, wherein the cylindrical wall (42) of the partition lid (4) has one or more protrusions (47) that extend in the axial direction on the outer circumferential surface of the second end of the cylindrical wall (42).

5. The flareless pipe coupling structure according to claim 3, wherein the projecting portion (25) of the pipe coupling portion (23) has one or more protrusions (74) that extend in the axial direction on the inner circumferential surface of the projecting portion (25).

6. The flareless pipe coupling structure according to claim 2, wherein:
in order to allow the second end of the cylindrical wall (42) of the partition lid (4) to be attached to and detached from the pipe coupling portion (23),
a cylindrical projecting portion (25) projecting toward the fitting main body (1) is formed on the outer circumferential surface of the first end of the pipe coupling portion (23), and the projecting portion (25) is press fitted in the second end of the cylindrical wall (42).

7. The flareless pipe coupling structure according to claim 6, wherein the cylindrical wall (42) of the partition lid (4) has one or more protrusions that extend In the axial direction on the inner circumferential surface of the second end of the cylindrical wall (42).

8. The flareless pipe coupling structure according to claim 6, wherein the projecting portion (25) of the pipe coupling portion (23) has one or more protrusions that extend In the axial direction on the outer circumferential surface of the projecting portion (25).

9. The flareless pipe coupling structure according to claim 2, wherein:
in order to allow the second end of the cylindrical wall (42) of the partition lid (4) to be attached to and detached from the pipe coupling portion (23),
a cylindrical projecting portion (25) projecting toward the fitting main body (1) is formed on the outer circumferential surface of the first end of the pipe coupling portion (23), and an internal thread (78) is formed on the Inner circumferential surface of the projecting portion (25), and
an external thread (77) is formed on the outer circumferential surface of the second end of the cylindrical wall (42) to be threaded to the internal thread (78) at the opening end of the projecting portion (25).

10. The flareless pipe coupling structure according to claim 2, wherein:
in order to allow the second end of the cylindrical wall (42) of the partition lid (4) to be attached to and detached from the pipe coupling portion (23),
a cylindrical projecting portion (25) projecting toward the fitting main body (1) is formed on the outer circumferential surface of the first end of the pipe coupling portion (23), and an external thread (77) is formed on the outer circumferential surface of the projecting portion (25), and
an internal thread (78) is formed on the inner circumferential surface of the second end of the cylindrical wall (42) to be threaded to the external thread (77) at the opening end of the projecting portion (25).

11. The flareless pipe coupling structure according to claim 2, wherein:
in order to allow the second end of the cylindrical wall (42) of the partition lid (4) to be attached to and detached from the pipe coupling portion (23),
a cylindrical projecting portion (25) projecting toward the fitting main body (1) is formed on the outer circumferential surface of the first end of the pipe coupling portion (23), and a first annular protrusion (82) protruding inward is formed at the opening end of the projecting portion (25), and
a second annular protrusion (81) protruding outward is formed at the second end of the cylindrical wall (42), the second annular protrusion (81) being press fitted into the first annular protrusion (82).

12. The flareless pipe coupling structure according to claim 2, wherein:
In order to allow the second end of the cylindrical wall (42) of the partition lid (4) to be attached to and detached from the pipe coupling portion (23),
a cylindrical projecting portion (25) projecting toward the fitting main body (1) is formed on the outer circumferential surface of the first end of the pipe coupling portion (23), and a first annular protrusion (82) protruding inward is formed at the opening end of the projecting portion (25), an internal thread (82a) being formed on the Inner circumferential surface of the first annular protrusion (82), and
a second annular protrusion (81) protruding outward is formed at the second end of the cylindrical wall (42), an external thread (81 a) being formed on the outer circumferential surface of the second annular protrusion (81), the external thread (81 a) being threaded to the internal thread (82a) formed on the inner circumferential surface of the first annular protrusion (82).

13. The flareless pipe coupling structure according to claim 2, wherein:
in order to allow the second end of the cylindrical wall (42) of the partition lid (4) to be attached to and detached from the pipe coupling portion (23),
a plurality of holes (51) are formed In the pipe coupling portion (23), the holes (51) being arranged on one circumference and extending along the axial direction of the pipe coupling portion (23), and
the cylindrical wall (42) has a plurality of leg members (85) extending along the axial direction from the second end of the cylindrical wall (42) toward the coupling member (2), the leg members (85) being fitted In the holes (51).

14. The flareless pipe coupling structure according to claim 1, wherein the ferrule (3) is formed integrally with the first end of the pipe coupling portion (23), and is formed to be separable from the pipe coupling portion (23) during a pipe connecting process.

15. The flareless pipe coupling structure according to any one of claims 1 to 12, wherein the ferrule (3) is formed separately from the coupling member (2) and the fitting main body (1), and is formed to be retainable by the pipe coupling portion (23).

16. A valve comprising the pipe coupling structure according to any one of claims 1 to 15 as a pipe fitting portion.

17. A flareless pipe fitting comprising the pipe coupling structure according to any one of claims 1 to 15 as a pipe fitting portion.

18. A refrigerating device **characterized in that** the valve according to claim 16 is used in a refrigerant circuit.

19. A refrigerating device **characterized in that** the flareless pipe fitting according to claim 17 is used in a refrigerant circuit.

## Patentansprüche

1. Bördellose Rohrverbindungsstruktur mit einem Anschlusshauptkörper (1), einem Verbindungselement (2), das an den Anschlusshauptkörper (1) geschraubt und angebracht ist, einer Hülse (3), die fest zwischen dem Anschlusshauptkörper (1) und dem Verbindungselement (2) gehalten ist, und einem Schutzelement (4), das lösbar zwischen dem Anschlusshauptkörper (1) und dem Verbindungselement (2) gehalten ist und die Hülse (3) schützt, wobei:
der Anschlusshauptkörper (1) einen zylindrischen Abschnitt (13), der auf dessen innerer Umfangsfläche (13a) ein Innengewinde aufweist, an welches das Verbindungselement (2) geschraubt ist, einen Basisabschnitt (11), der eine Seitenwand des zylindrischen Abschnitts (13) ausbildet, eine Rohreinbringöffnung (16, 17), die in einem axialen Abschnitt des Basisabschnitts (11) ausgebildet ist, und eine Nockenlaufbahn, die am Zugang der Rohreinbringöffnung (16, 17) ausgebildet ist und das distale Ende der Hülse (3) drückt, aufweist,
das Verbindungselement (2) einen Rohrverbindungsabschnitt (23), an dessen äußerer Umfangsfläche ein Außengewinde (23a), an welches das Innengewinde (13a) geschraubt ist, und eine Druckfläche (28), die auf einer Seite des Rohrverbindungsabschnitts (23) ausgebildet ist, und das Hinterende der Hülse (3) drückt, aufweist,
die Hülse (3) in dem und durch das Schutzelement (4) in einem Zustand, in dem das Schutzelement (4) an dem Verbindungselement (2) angebracht ist, gehalten und geschützt ist, und
das Schutzelement aus einem Trenndeckel (4), der eine zylindrische Wand (42) mit einem Raum zur Aufnahme der Hülse (3) und eine Verschlusswand (41), die ein Ende der zylindrischen Wand (42) und der Rohreinbringöffnung (16, 17) schließt, aufweist; wobei die zylindrische Wand (42) ein erstes Ende, angeordnet in der Umgebung des Anschlusshauptkörpers (1) und ein zweites Ende, angeordnet auf einer Seite gegenüber dem ersten Ende, aufweist; der Rohrverbindungsabschnitt (23) ein erstes Ende, angeordnet in der Umgebung des Anschlusshauptkörpers (1) aufweist, und das zweite Ende der zylindrischen Wand (42) lösbar an dem ersten Ende des Rohrverbindungsabschnitts (23) angebracht ist.

2. Bördellose Rohrverbindungsstruktur nach Anspruch 1, wobei
die Hülse (3) als separates Element von dem Verbindungselement (2) ausgebildet ist und mit dem Verbindungselement (2) vereint ist, indem es vorübergehend durch das Verbindungselement (2) gehalten ist.

3. Bördellose Rohrverbindungsstruktur nach Anspruch 2, wobei:
damit es dem zweiten Ende der zylindrischen Wand (42) des Trenndeckels (4) ermöglicht wird, an dem Rohrverbindungsabschnitt (23) angebracht und von diesem gelöst zu werden,
ein zylindrischer vorstehender Abschnitt (25), der sich zu dem Anschlusshauptkörper (1) hin erstreckt, an der äußeren Umfangsfläche des ersten Endes des Rohrverbindungsabschnitt (23) ausgebildet ist und das zweite Ende der zylindrischen Wand (42) in den vorstehenden Abschnitt (25) eingepresst ist.

4. Bördellose Rohrverbindungsstruktur nach Anspruch 3, wobei
die zylindrische Wand (42) des Trenndeckels (4) einen oder mehrere Vorsprünge (47) aufweist, die sich in der axialen Richtung auf der äußeren Umfangsfläche des zweiten Endes der zylindrischen Wand (42) erstrecken.

5. Bördellose Rohrverbindungsstruktur nach Anspruch 3, wobei
der vorstehende Abschnitt (25) des Rohrverbindungsabschnitts (23) einen oder mehrere Vorsprünge (74) aufweist, die sich in der axialen Richtung auf der inneren Umfangsfläche des vorstehenden Abschnitts (25) erstrecken.

6. Bördellose Rohrverbindungsstruktur nach Anspruch 2, wobei:
damit es dem zweiten Ende der zylindrischen Wand (42) des Trenndeckels (4) ermöglicht wird, an dem Rohrverbindungsabschnitt (23) angebracht und von diesem gelöst zu werden,
ein zylindrischer vorstehender Abschnitt (25), der sich zu dem Anschlusshauptkörper (1) hin erstreckt, an der äußeren Umfangsfläche des ersten Endes des Rohrverbindungsabschnitt (23) ausgebildet ist und der vorstehenden Abschnitt (25) in das zweite Ende der zylindrischen Wand (42) eingepresst ist.

7. Bördellose Rohrverbindungsstruktur nach Anspruch 6, wobei
die zylindrische Wand (42) des Trenndeckels (4) einen oder mehrere Vorsprünge aufweist, die sich in der axialen Richtung auf der inneren Umfangsfläche des zweiten Endes der zylindrischen Wand (42) erstrecken.

8. Bördellose Rohrverbindungsstruktur nach Anspruch 6, wobei
der vorstehende Abschnitt (25) des Rohrverbindungsabschnitts (23) einen oder mehrere Vorsprünge aufweist, die sich in der axialen Richtung auf der äußeren Umfangsfläche des vorstehenden Abschnitts (25) erstrecken.

9. Bördellose Rohrverbindungsstruktur nach Anspruch 2, wobei:
damit es dem zweiten Ende der zylindrischen Wand (42) des Trenndeckels (4) ermöglicht wird, an dem Rohrverbindungsabschnitt (23) angebracht und von diesem gelöst zu werden,
ein zylindrischer vorstehender Abschnitt (25), der sich zu dem Anschlusshauptkörper (1) hin erstreckt, an der äußeren Umfangsfläche des ersten Endes des Rohrverbindungsabschnitt (23) ausgebildet ist,
ein Innengewinde (78) auf der inneren Umfangsfläche des vorstehenden Abschnitts (25) ausgebildet ist, und
ein Außengewinde (77) an der äußeren Umfangsfläche des zweiten Endes der zylindrischen Wand (42) ausgebildet ist, um an das Innengewinde (78) an dem Öffnungsende des vorstehenden Abschnitts (25) geschraubt zu sein.

10. Bördellose Rohrverbindungsstruktur nach Anspruch 2, wobei:
damit es dem zweiten Ende der zylindrischen Wand (42) des Trenndeckels (4) ermöglicht wird, an dem Rohrverbindungsabschnitt (23) angebracht und von diesem gelöst zu werden,
ein zylindrischer vorstehender Abschnitt (25), der sich zu dem Anschlusshauptkörper (1) hin erstreckt, an der äußeren Umfangsfläche des ersten Endes des Rohrverbindungsabschnitt (23) ausgebildet ist,
ein Außengewinde (77) auf der äußeren Umfangsfläche des vorstehenden Abschnitts (25) ausgebildet, und
ein Innengewinde (78) an der inneren Umfangsfläche des zweiten Endes der zylindrischen Wand (42) ausgebildet ist, um an das Außengewinde (77) an dem Öffnungsende des vorstehenden Abschnitts (25) geschraubt zu sein.

11. Bördellose Rohrverbindungsstruktur nach Anspruch 2, wobei:
damit es dem zweiten Ende der zylindrischen Wand (42) des Trenndeckels (4) ermöglicht wird, an dem Rohrverbindungsabschnitt (23) angebracht und von diesem gelöst zu werden,
ein zylindrischer vorstehender Abschnitt (25), der sich zu dem Anschlusshauptkörper (1) hin erstreckt, an der äußeren Umfangsfläche des ersten Endes des Rohrverbindungsabschnitt (23) ausgebildet ist, und
ein erster ringförmiger Vorsprung (82), der nach innen vorsteht, an dem Öffnungsende des hervorstehenden Abschnitts (25) ausgebildet ist, und
ein zweiter ringförmiger Vorsprung (81), der nach außen vorsteht, an dem zweiten Ende der zylindrischen Wand (42) ausgebildet ist, wobei der zweite ringförmige Vorsprung (81) in den ersten ringförmigen Vorsprung (82) eingepresst ist.

12. Bördellose Rohrverbindungsstruktur nach Anspruch 2, wobei:
damit es dem zweiten Ende der zylindrischen Wand (42) des Trenndeckels (4) ermöglicht wird, an dem Rohrverbindungsabschnitt (23) angebracht und von diesem gelöst zu werden,
ein zylindrischer vorstehender Abschnitt (25), der sich zu dem Anschlusshauptkörper (1) hin erstreckt, an der äußeren Umfangsfläche des ersten Endes des Rohrverbindungsabschnitt (23) ausgebildet ist und
ein erster ringförmiger Vorsprung (82), der nach innen vorsteht, an dem Öffnungsende des vorstehenden Abschnitts (25) ausgebildet ist, und
ein Innengewinde (82a) auf der inneren Umfangfläche des ersten ringförmigen Vorsprungs (82) ausgebildet ist, und
ein zweiter ringförmiger Vorsprung (81), der nach außen vorsteht, an dem zweiten Ende der zylindrischen Wand (42) ausgebildet ist, und
ein Außengewinde (81a) auf der äußeren Umfangsfläche des zweiten ringförmigen Vorsprungs (81) ausgebildet ist, wobei das Außengewinde (81a) an das, an der inneren Umfangsfläche des ersten ringförmigen Vorsprungs (82) gebildete Innengewinde (82a), geschraubt ist.

13. Bördellose Rohrverbindungsstruktur nach Anspruch 2, wobei:
damit es dem zweiten Ende der zylindrischen Wand (42) des Trenndeckels (4) ermöglicht wird, an dem Rohrverbindungsabschnitt (23) angebracht und von diesem gelöst zu werden,
mehrere Öffnungen (51) in dem Rohrverbindungsabschnitt (23) ausgebildet sind, wobei die Öffnungen (51) auf einem Umfang angeordnet sind und sich entlang der axialen Richtung des Rohrverbindungsabschnitts (23) erstrecken, und
die zylindrische Wand (42) mehrere Schenkelelemente (85) aufweist, die sich entlang der axialen Richtung von dem zweiten Ende der Zylinderwand (42) zu dem Verbindungselement (2) hin erstrecken, wobei die Schenkelelemente (85) in den Öffnungen (51) angebracht sind.

14. Bördellose Rohrverbindungsstruktur nach Anspruch 1, wobei
die Hülse (3) einstückig mit dem ersten Ende des Rohrverbindungsabschnitts (23) ausgebildet ist, und ausgebildet ist, um während eines Rohrverbindungsprozesses trennbar von dem Rohrverbindungsabschnitt (23) zu sein.

15. Bördellose Rohrverbindungsstruktur nach einem der Ansprüche 1 bis 12, wobei
die Hülse (3) getrennt von dem Verbindungselement (2) und dem Anschlusshauptkörper (1) ausgebildet ist, und ausgebildet ist, um von dem Rohrverbindungsabschnitt (23) gehalten zu werden.

16. Ventil, mit der Rohrverbindungsstruktur nach einem der Ansprüche 1 bis 15 als ein Rohranschlussabschnitt.

17. Bördelloser Rohranschluss, mit der Rohrverbindungsstruktur nach einem der Ansprüche 1 bis 15 als ein Rohranschlussabschnitt.

18. Kühleinrichtung **dadurch gekennzeichnet, dass** das Ventil nach Anspruch 16 in einem Kühlkreislauf verwendet wird.

19. Kühleinrichtung **dadurch gekennzeichnet, dass** der bördellose Rohranschluss nach Anspruch 17 in einem Kühlkreislauf verwendet wird.

## Revendications

1. Structure de raccordement de tuyaux de type morsure, comprenant un corps principal de raccord (1), un élément de raccordement (2) vissé et monté sur le corps principal de raccord (1), une virole (3) maintenue fermement entre le corps principal de raccord (1) et l'élément de raccordement (2), et un élément de protection (4) qui est maintenu de manière amovible entre le corps principal de raccord (1) et l'élément de raccordement (2) et qui protège la virole (3), où :
le corps principal de raccord (1) comporte une partie cylindrique (13) ayant, sur sa surface circonférentielle intérieure, un filetage interne (13a) sur lequel l'élément de raccordement (2) est vissé, une partie de base (11) formant une paroi latérale de la partie cylindrique (13), un orifice d'insertion de tuyau (16, 17) formé dans une partie axiale de la partie de base (11), et une surface de came qui est formée au niveau de l'entrée de l'orifice d'insertion de tuyau (16, 17) et qui exerce une pression sur l'extrémité distale de la virole (3),
l'élément de raccordement (2) comporte une partie de raccordement de tuyaux (23), sur sa surface circonférentielle extérieure, un filetage externe (23a) sur lequel le filetage interne (13a) est vissé, et une surface de pressage (28) qui est formée sur un côté de la partie de raccordement de tuyaux (23) et qui exerce une pression sur l'extrémité arrière de la virole (3),
la virole (3) est retenue à l'intérieur de l'élément de protection (4) et est protégée par celui-ci dans un état où l'élément de protection (4) est fixé à l'élément de raccordement (2), et
l'élément de protection est formé d'un couvercle de séparation (4) qui comporte une paroi cylindrique (42) présentant un espace destiné à recevoir la virole (3) et une paroi de fermeture (41) qui ferme une extrémité de la paroi cylindrique (42) et l'orifice d'insertion de tuyau (16, 17) ; la paroi cylindrique (42) présente une première extrémité située au voisinage du corps principal de raccord (1), et une deuxième extrémité située sur un côté opposé à la première extrémité ; la partie de raccordement de tuyaux (23) présente une première extrémité située au voisinage du corps principal de raccord (1) ; et la deuxième extrémité de la paroi cylindrique (42) est fixée de manière amovible à la première extrémité de la partie de raccordement de tuyaux (23).

2. Structure de raccordement de tuyaux de type morsure selon la revendication 1, dans laquelle la virole (3) est formée en tant qu'élément séparé de l'élément de raccordement (2) et rassemblé avec l'élément de raccordement (2) en étant temporairement retenu par l'élément de raccordement (2).

3. Structure de raccordement de tuyaux de type morsure selon la revendication 2, dans laquelle :
afin de permettre à la deuxième extrémité de la paroi cylindrique (42) du couvercle de séparation (4) d'être fixée à la partie de raccordement de tuyaux (23) et d'être détachée de celle-ci,
une partie cylindrique en saillie (25) faisant saillie vers le corps principal de raccord (1) est formée sur la surface circonférentielle extérieure de la première extrémité de la partie de raccordement de tuyaux (23), et la deuxième extrémité de la paroi cylindrique (42) est ajustée par pression dans la partie en saillie (25).

4. Structure de raccordement de tuyaux de type morsure selon la revendication 3, dans laquelle la paroi cylindrique (42) du couvercle de séparation (4) présente une ou plusieurs protubérance(s) (47) qui s'étend/s'étendent dans la direction axiale sur la surface circonférentielle extérieure de la deuxième extrémité de la paroi cylindrique (42).

5. Structure de raccordement de tuyaux de type morsure selon la revendication 3, dans laquelle la partie en saillie (25) de la partie de raccordement de tuyaux (23) présente une ou plusieurs protubérance (s) (74) qui s'étend/s'étendent dans la direction axiale sur la surface circonférentielle intérieure de la partie en saillie (25).

6. Structure de raccordement de tuyaux de type morsure selon la revendication 2, dans laquelle :
afin de permettre à la deuxième extrémité de la paroi cylindrique (42) du couvercle de séparation (4) d'être fixée à la partie de raccordement de tuyaux (23) et d'être détachée de celle-ci,
une partie cylindrique en saillie (25) faisant saillie vers le corps principal de raccord (1) est formée sur la surface circonférentielle extérieure de la première extrémité de la partie de raccordement de tuyaux (23), et la partie en saillie (25) est ajustée par pression dans la deuxième extrémité de la paroi cylindrique (42).

7. Structure de raccordement de tuyaux de type morsure selon la revendication 6, dans laquelle la paroi cylindrique (42) du couvercle de séparation (4) présente une ou plusieurs protubérance(s) qui s'étend/s'étendent dans la direction axiale sur la surface circonférentielle intérieure de la deuxième extrémité de la paroi cylindrique (42).

8. Structure de raccordement de tuyaux de type morsure selon la revendication 6, dans laquelle la partie en saillie (25) de la partie de raccordement de tuyaux (23) présente une ou plusieurs protubérance(s) qui s'étend/s'étendent dans la direction axiale sur la surface circonférentielle extérieure de la partie en saillie (25).

9. Structure de raccordement de tuyaux de type morsure selon la revendication 2, dans laquelle :
afin de permettre à la deuxième extrémité de la paroi cylindrique (42) du couvercle de séparation (4) d'être fixée à la partie de raccordement de tuyaux (23) et d'être détachée de celle-ci,
une partie cylindrique en saillie (25) faisant saillie vers le corps principal de raccord (1) est formée sur la surface circonférentielle extérieure de la première extrémité de la partie de raccordement de tuyaux (23), et un filetage interne (78) est formé sur la surface circonférentielle intérieure de la partie en saillie (25), et
un filetage externe (77) est formé sur la surface circonférentielle extérieure de la deuxième extrémité de la paroi cylindrique (42) pour être vissé sur le filetage interne (78) au niveau de l'extrémité d'ouverture de la partie en saillie (25).

10. Structure de raccordement de tuyaux de type morsure selon la revendication 2, dans laquelle :
afin de permettre à la deuxième extrémité de la paroi cylindrique (42) du couvercle de séparation (4) d'être fixée à la partie de raccordement de tuyaux (23) et d'être détachée de celle-ci,
une partie cylindrique en saillie (25) faisant saillie vers le corps principal de raccord (1) est formée sur la surface circonférentielle extérieure de la première extrémité de la partie de raccordement de tuyaux (23), et un filetage externe (77) est formé sur la surface circonférentielle extérieure de la partie en saillie (25), et
un filetage interne (78) est formé sur la surface circonférentielle intérieure de la deuxième extrémité de la paroi cylindrique (42) pour être vissé sur le filetage externe (77) au niveau de l'extrémité d'ouverture de la partie en saillie (25).

11. Structure de raccordement de tuyaux de type morsure selon la revendication 2, dans laquelle :
afin de permettre à la deuxième extrémité de la paroi cylindrique (42) du couvercle de séparation (4) d'être fixée à la partie de raccordement de tuyaux (23) et d'être détachée de celle-ci,
une partie cylindrique en saillie (25) faisant saillie vers le corps principal de raccord (1) est formée sur la surface circonférentielle extérieure de la première extrémité de la partie de raccordement de tuyaux (23), et une première protubérance annulaire (82) faisant saillie vers l'intérieur est formée au niveau de l'extrémité d'ouverture de la partie en saillie (25), et
une deuxième protubérance annulaire (81) faisant saillie vers l'extérieur est formée au niveau de la deuxième extrémité de la paroi cylindrique (42), la deuxième protubérance annulaire (81) étant ajustée par pression dans la première protubérance annulaire (82).

12. Structure de raccordement de tuyaux de type morsure selon la revendication 2, dans laquelle :
afin de permettre à la deuxième extrémité de la paroi cylindrique (42) du couvercle de séparation (4) d'être fixée à la partie de raccordement de tuyaux (23) et d'être détachée de celle-ci,
une partie cylindrique en saillie (25) faisant saillie vers le corps principal de raccord (1) est formée sur la surface circonférentielle extérieure de la première extrémité de la partie de raccordement de tuyaux (23), et une première protubérance annulaire (82) faisant saillie vers l'intérieur est formée au niveau de l'extrémité d'ouverture de la partie en saillie (25), un filetage interne (82a) étant formé sur la surface circonférentielle intérieure de la première protubérance annulaire (82), et
une deuxième protubérance annulaire (81) faisant saillie vers l'extérieur est formée au niveau de la deuxième extrémité de la paroi cylindrique (42), un filetage externe (81a) étant formé sur la surface circonférentielle extérieure de la deuxième protubérance annulaire (81), le filetage externe (81a) étant vissé sur le filetage interne (82a) formé sur la surface circonférentielle intérieure de la première protubérance annulaire (82).

13. Structure de raccordement de tuyaux de type morsure selon la revendication 2, dans laquelle :
afin de permettre à la deuxième extrémité de la paroi cylindrique (42) du couvercle de séparation (4) d'être fixée à la partie de raccordement de tuyaux (23) et d'être détachée de celle-ci,
une pluralité de trous (51) sont formés dans la partie de raccordement de tuyaux (23), les trous (51) étant agencés sur une circonférence et s'étendant le long de la direction axiale de la partie de raccordement de tuyaux (23), et
la paroi cylindrique (42) présente une pluralité d'éléments formant pattes (85) s'étendant le long de la direction axiale à partir de la deuxième extrémité de la paroi cylindrique (42) vers l'élément de raccordement (2), les éléments formant pattes (85) étant ajustés dans les trous (51).

14. Structure de raccordement de tuyaux de type morsure selon la revendication 1, dans laquelle la virole (3) est formée d'un seul tenant avec la première extrémité de la partie de raccordement de tuyaux (23), et est formée de manière à pouvoir être séparée de la partie de raccordement de tuyaux (23) au cours d'un processus de raccordement de tuyaux.

15. Structure de raccordement de tuyaux de type morsure selon l'une quelconque des revendications 1 à 12, dans laquelle la virole (3) est formée séparément de l'élément de raccordement (2) et du corps principal de raccord (1), et est formée de manière à pouvoir être retenue par la partie de raccordement de tuyaux (23).

16. Soupape comprenant la structure de raccordement de tuyaux selon l'une quelconque des revendications 1 à 15 en tant que partie de raccord de tuyaux.

17. Raccord de tuyaux de type morsure comprenant la structure de raccordement de tuyaux selon l'une quelconque des revendications 1 à 15 en tant que partie de raccord de tuyaux.

18. Dispositif de réfrigération **caractérisé en ce que** la soupape selon la revendication 16 est utilisée dans un circuit de fluide frigorigène.

19. Dispositif de réfrigération **caractérisé en ce que** le raccord de tuyaux de type morsure selon la revendication 17 est utilisé dans un circuit de fluide frigorigène.
